# EUROPÄISCHE PATENTSCHRIFT

(11) **EP 2 099 383 B1**
(45) Veröffentlichungstag und Bekanntmachung des Hinweises auf die Patenterteilung: **19.08.2015**
(21) Anmeldenummer: 07856045.5
(22) Anmeldetag: 29.11.2007
(51) Int. Cl.: A61C 19/045, A61C 9/00, A61C 11/00

(54) **VERFAHREN UND VORRICHTUNG ZUM SCHARNIERACHSENBEZOGENEN TRANSFER EINES KIEFERMODELLS**
METHOD AND DEVICE FOR THE TRANSFER OF A JAW MODEL IN RELATION TO A HINGE AXIS
PROCÉDÉ ET DISPOSITIF DE TRANSFERT, PAR RAPPORT À UN AXE D'ARTICULATION, D'UN MODÈLE DE MÂCHOIRE

(30) Priorität: 01.12.2006 DE 102006057220
(43) Veröffentlichungstag der Anmeldung: 16.09.2009
(73) Patentinhaber: Dental Innovation GmbH, 44227 Dortmund (DE)
(72) Erfinder: Klett, Rolf, 97204 Höchberg (DE)
(74) Vertreter: Zwicker, Jörk
(86) Internationale Anmeldenummer: PCT/DE2007/002161
(87) Internationale Veröffentlichungsnummer: WO 2008/064666

(56) Entgegenhaltungen:
- WO-A-2004/029903
- WO-A-2006/015809
- DE-A1- 4 317 532
- DE-A1- 4 411 907
- DE-A1- 19 956 876
- US-A- 5 090 901
- US-A- 6 120 290

## Beschreibung

Die Erfindung betrifft ein Verfahren zum scharnierachsenbezogenen Transfer eines Kiefermodells eines Patienten gemäß Patentanspruch 1, ein Registriersystem gemäß dem Oberbegriff des Patentanspruchs 14.

Häufig können zahntechnische Arbeiten, wie beispielsweise die Vorbereitung, die Herstellung und die Anpassung von Zahnersatz, die Herstellung von Inlays oder Aufbissbehelfen usw., nur zu einem Teil am Patienten bzw. im Mund des Patienten selbst durchgeführt werden, sondern müssen vielmehr zumindest zu einem erheblichen Teil beispielsweise im zahntechnischen Labor in einen Artikulator erfolgen. Der Artikulator hat dabei die Aufgabe, die geometrischen Verhältnisse im Bereich des Kiefers des Patienten mehr oder weniger genau nachzubilden bzw. am Arbeitsplatz des Zahntechnikers zu simulieren.

Im Sinne der Qualität und erforderlichen Genauigkeit zahntechnischer Arbeiten, die sich aufgrund der hohen sensorischen Empfindlichkeit des gnathologischen Systems beim Menschen oftmals im Hundertstelmillimeterbereich oder noch darunter bewegt, kann es dabei - in Abhängigkeit der Komplexität der durchzuführenden Arbeiten - erforderlich werden, den patientenseitigen Kauapparat und dessen geometrische Kennwerte im zahntechnischen Artikulator sehr genau abbilden zu müssen.

Zu diesen grundlegenden, in den Artikulator zu übertragenden geometrischen Kennwerten der Kiefergeometrie gehören dabei insbesondere - jedoch keineswegs ausschließlich - die räumlichen Relativpositionen der Zahnreihen des Oberkiefers und des Unterkiefers zueinander sowie zur Patienten-Scharnierachse, somit zur Gelenkachse des Unterkiefers in Beziehung zum Oberkiefer bzw. Schädel. Da diese geometrischen Kennwerte bei jedem Patienten unterschiedlich ausfallen, können die sog. mittelwertigen Einstellungen dieser geometrischen Kennwerte, insbesondere eine mittelwertige Einstellung der Scharnierachsenlage am Artikulator, allenfalls für einfache zahntechnische Arbeiten mit nur geringen Genauigkeitsanforderungen eingesetzt werden.

Für anspruchsvollere zahntechnische Arbeiten ist es hingegen zumeist unabdingbar, die gnathologische Geometrie von Patienten, und dabei insbesondere die räumliche Relativposition der Kiefer relativ zur Patienten-Scharnierachse, mit möglichst hoher Genauigkeit im Artikulator zu reproduzieren.

Die Reproduktion der geometrischen Verhältnisse am Kiefer eines Patienten in einem Artikulator erfolgt dabei üblicherweise dadurch, dass ein Modell einer ersten Zahnreihe des Patienten mittels entsprechender Transferverfahren bzw. Transfervorrichtungen positions- und lagegerecht bezüglich der Scharnierachse des Artikulators in einem Artikulator montiert wird. Anschließend wird ein Modell der zweiten Zahnreihe des Patienten in Okklusionsstellung relativ zur ersten Zahnreihe ebenfalls im Artikulator positioniert - was zumeist mittels eines zentrischen Registrats, also mit Hilfe eines Abdrucks beider Zahnreihen des Patienten in Okklusionsstellung in einem geeigneten dünnen Abdruckmaterial, erfolgt - und sodann wird das Modell der zweiten Zahnreihe in dieser Okklusionsstellung ebenfalls im Artikulator befestigt. Auf diese Weise ist somit die Relativposition der beiden Zahnreihen des Patienten zueinander, ebenso wie zur Scharnierachse des Patienten bzw. auch zur Artikulator-Scharnierachse, im Artikulator reproduziert.

Bei den aus dem Stand der Technik bekannten Verfahren und Vorrichtungen zum Transfer von Kiefermodellen eines Patienten erfolgt die Übertragung der am Schädel des Patienten vorliegenden geometrischen Relativbeziehungen zwischen Kiefer und Scharnierachse in den zahntechnischen Artikulator bzw. in einen Artikulator-Montagestand im Allgemeinen mittels eines Gesichtsbogens. Der Gesichtsbogen dient dabei dazu, die räumliche Relativposition einer Zahnreihe des Patienten zur Scharnierachse des Patienten auf zumeist mechanische Weise dergestalt zu speichern bzw. mittels entsprechender Justierung des Gesichtsbogens zu kodieren, dass diese räumliche Relativposition zwischen Zahnreihe und Scharnierachse des Patienten später auch außerhalb des Patienten, insbesondere im zahntechnischen Labor bzw. am Artikulator, reproduziert werden kann.

Zu diesem Zweck wird im Stand der Technik üblicherweise die räumliche Relativposition zwischen der Zahnreihe des Oberkiefers einerseits und bestimmten Fixpunkten am Patientenschädel andererseits mittels entsprechender Justierung des Gesichtsbogens abgenommen bzw. somit im Gesichtsbogen codiert. Die hierzu aus dem Stand der Technik einerseits bekannte sog. arbiträre Gesichtsbogenübertragung bedient sich dabei zumeist eines empirisch festgestellten Zusammenhangs zwischen der typischen Lage der Scharnierachse relativ zum Porion des Patienten - also relativ zum höchsten Punkt des äußeren Gehörgangs - am menschlichen Schädel.

Bei dieser bekannten arbiträren Gesichtsbogenübertragung wird am Patientenschädel somit nicht die tatsächliche Scharnierachse abgegriffen und mittels des Gesichtsbogens zur Übertragung in den Artikulator codiert, sondern es wird - beispielsweise mittels entsprechender, am Gesichtsbogen angeordneter Ohroliven, die in den äußeren Gehörgang des Patienten eingeführt werden - von der Position des Porion auf die Lage der Patienten-Scharnierachse lediglich anhand statistischer Mittelwerte geschlossen.

Die arbiträre Gesichtsbogenübertragung kann somit lediglich eine mittelwertige, keinesfalls aber eine exakte Reproduktion der geometrischen Verhältnisse des gnathologischen Systems eines Patienten im Artikulator gewährleisten, und eignet sich daher auch nur für den Einsatz bei weniger anspruchsvollen Arbeiten im zahntechnischen Labor, bei denen es im Wesentlichen auf die mittels zentrischem Registrat vorgenommene Reproduktion der korrekten Okklusion zwischen Oberkiefer und Unterkiefer ankommt.

Anspruchsvollere Restaurationsarbeiten im Artikulator erfordern jedoch häufig die nicht nur mittelwertige, sondern vielmehr individuelle und genaue Übertragung der Scharnierachsenlage relativ zu den Zahnreihen der Kiefer des Patienten. Im Stand der Technik erfolgt die hierzu erforderliche Erfassung und Übertragung der tatsächlichen Scharnierachsenlage zumeist anhand kinematischer Bestimmung der Patienten-Scharnierachse. Diese kinematische Scharnierachsenbestimmung kann beispielsweise anhand eines Unterkiefermessbogens elektronisch - oder mittels mechanischer Stiftaufzeichnung - vorgenommen werden. Dabei kann die ermittelte, tatsächliche Patienten-Scharnierachsenlage anschließend auf einem sog. terminalen Gesichtsbogen codiert werden, bei dem sich im Gegensatz zum arbiträren Gesichtsbogen die Lage der Scharnierachse justieren und somit individuell auf den Artikulator übertragen lässt.

Im Stand der Technik ist es jedoch auch bei einem Geometrietransfer mittels kinematischer Achsenbestimmung und terminalen Gesichtsbogens notwendig, die kinematisch bestimmte tatsächliche Scharnierachsenlage zunächst einmal mittels entsprechender Messmarkierungen zumeist auf der Haut des Patienten festzuhalten. Im Anschluss daran wird die zur Achsenlokalisierung verwendete Apparatur vom Kopf des Patienten entfernt, es wird der terminale Gesichtsbogen mit der Zahnreihe des Oberkiefers gekoppelt und der Bogen auf die zuvor angebrachten Gelenkachsen-Messmarkierungen einjustiert. Da die Haut des Patienten - und damit auch die auf der Haut angeordneten Messmarkierungen bezüglich der Scharnierachsenlage - relativ zum Schädel des Patienten leicht beweglich ist, können jedoch auch beim Einsatz eines terminalen Gesichtsbogens bereits hierdurch nicht unerhebliche Übertragungsfehler induziert werden.

In jedem Fall bringt aber - auch unabhängig davon, ob durch etwa auf der Haut des Patienten leicht verschieblich angeordnete Messmarkierungen Ungenauigkeiten induziert werden oder nicht - allein der zweifache Übertragungsvorgang der Scharnierachsen-Messwerte zunächst vom Messbogen auf die Messmarkierungen, und der sich anschließende manuelle Abgriff der Messmarkierungen mittels eines Gesichtsbogens, nicht unerhebliche Fehlerquellen mit sich.

Erst im Anschluss an die dementsprechende Einjustierung des terminalen Gesichtsbogens - insbesondere anhand der Markierungen zur Scharnierachsenlage am Patientenkopf - kann sodann der Gesichtsbogen vom Kopf des Patienten abgenommen werden, und die gnathologische Geometrie des Patienten kann mittels der nun im Gesichtsbogen gespeicherten räumlichen Relativbeziehung zwischen der Zahnreihe des Oberkiefers und der kinematisch bestimmten Kondylarachse in einen Artikulator oder einen Artikulator-Montagestand übertragen werden.

Im Ergebnis ist bezüglich der bekannten Verfahren und Vorrichtungen zum Transfer von Kiefermodellen in einen Artikulator festzuhalten, dass die aus dem Stand der Technik bekannten Verfahren und Vorrichtungen - insbesondere aufgrund der Notwendigkeit, die Schädelgeometrie mittels eines Gesichtsbogens abzugreifen und auf den Artikulator zu übertragen - einerseits äußerst aufwändig, und andererseits fehlerbehaftet sind.

Auch die beim Stand der Technik zum Zweck des Geometrietransfers unabdingbare Weitergabe des kompletten Gesichtsbogens - bzw. zumindest einer Bissgabel mit Oberkiefer-Zahnimpression und eines an der Bissgabel angeordneten, auf die Kiefergeometrie des Patienten einjustierten empfindlichen Kupplungsmechanismus - an das zahntechnische Labor ist aufwändig und wegen der Notwendigkeit, diese Bauteile für verschiedene Patienten in mehrfacher Stückzahl vorrätig zu halten, tendenziell teuer. Nicht zuletzt besteht bei der Weitergabe, insbesondere beim etwaigen Versand des Gesichtsbogens bzw. des justierten Kupplungsmechanismus, an das zahntechnische Labor die zusätzliche Gefahr, dass die vorgenommene genaue Justierung unbeabsichtigt durch externe Krafteinwirkung verstellt wird, was unvermeidlich zur Produktion von teurem Ausschuss im zahntechnischen Labor führt.

Ein Verfahren gemäß dem Oberbegriff des Anspruchs 1 und ein Registriersystem gemäß dem Oberbegriff des Anspruchs 14 sind aus der WO 2006015809 bekannt.

Mit diesem Hintergrund ist es die Aufgabe der vorliegenden Erfindung, ein Verfahren und ein Registriersystem zum scharnierachsenbezogenen Transfer von Kiefermodellen mit einem zugehörigen Bissträger, sowie ferner eine Verbindungseinrichtung zur Kopplung eines Unterkieferadapters mit einem Messträger zu schaffen. Hiermit sollen die genannten, im Stand der Technik vorzufindenden Nachteile überwunden werden.

Insbesondere soll der Vorgang der Geometrieübertragung vom Kopf des Patienten in den Artikulator qualitativ entscheidend verbessert und dabei gleichzeitig maßgeblich vereinfacht werden. Das Verfahren und die Vorrichtung sollen ferner mit im Vergleich zum Stand der Technik erheblich verringertem Aufwand sowie unter nachhaltiger Reduzierung bzw. Eliminierung von Fehlerquellen, bei gleichzeitig vergrößerter Flexibilität einsetzbar sein. Angestrebt wird schließlich auch eine aus handwerklicher Sicht erhebliche Vereinfachung der Abnahme und des Transfers von Kiefergeometrien bzw. -modellen von Patienten in den Artikulator, so dass die entsprechenden Vorrichtungen und Verfahren auch von einem erweiterten Personenkreis einfacher und zuverlässiger angewendet werden können, als dies bei den aus dem Stand der Technik bekannten Verfahren der Fall ist.

Diese Aufgabe wird gelöst durch ein Verfahren gemäß Patentanspruch 1 bzw. durch ein Registriersystem gemäß Patentanspruch 14.

Bevorzugte Ausführungsformen sind Gegenstand der Unteransprüche.

Das Verfahren gemäß der Erfindung dient dem scharnierachsenbezogenen Transfer eines Kiefermodells eines Patienten in einen Artikulator-Montagestand mit einer Artikulator-Scharnierachse. Der Artikulator-Montagestand, bei dem es sich auch um einen geeigneten zahntechnischen Artikulator handeln kann, dient dabei der räumlich patientenanalogen Montage des Kiefermodells relativ zu der Artikulator-Scharnierachse.

Bei dem erfindungsgemäßen Verfahren kommt zum Transfer des Kiefermodells zunächst einmal ein Unterkieferadapter zum Einsatz, bei dem es sich beispielsweise um einen Abdrucklöffel, eine okklusale Bissgabel, einen paraokklusalen Registrierbehelf, oder um eine Kombination hieraus handeln kann. In jedem Fall weist der Unterkieferadapter einen geeigneten Bissträger auf, wobei der Bissträger anhand einer Abdruckmasse - unter Erzeugung eines Bissschlüssels, also einer Impression des Unterkiefers bzw. der Unterkiefer-Zahnreihe - mit dem Unterkiefer bzw. der Unterkiefer-Zahnreihe verbunden werden kann.

Der Unterkieferadapter umfasst ferner eine mit dem Bissträger verbundene Kupplungseinrichtung, wobei ferner der Artikulator bzw. Montagestand eine mit der Kupplungseinrichtung des Unterkieferadapters räumlich definiert formschlüssig verbindbare, zur Kupplungseinrichtung des Unterkieferadapters formkomplementäre Kupplungsaufnahme aufweist. Dabei ist die Kupplungseinrichtung des Montagestands relativ zur Scharnierachse des Montagestands reproduzierfähig verstellbar am Montagestand angeordnet.

Im Rahmen des erfindungsgemäßen Verfahrens wird dabei in einem ersten Verfahrenschritt a) zunächst Abdruckmasse auf einer unterkieferseitigen Zahnkontaktfläche des Unterkieferadapters angeordnet.

In einem weiteren Verfahrenschritt b) erfolgt sodann mittels der am Unterkieferadapter angeordneten Abdruckmasse eine Verbindung des Unterkieferadapters mit dem Zahnbogen des Patienten-Unterkiefers. Dabei wird eine Impression der Unterkiefer-Zahnreihe in der am Unterkieferadapter angeordneten Abdruckmasse erzeugt.

Sodann erfolgt in einem weiteren Verfahrenschritt c) eine Kiefergelenks-Registrierung mit Scharnierachsenbestimmung. Dabei wird die räumliche Lage der Scharnierachse des Patienten relativ zum Unterkieferadapter, insbesondere relativ zur Kupplungseinrichtung des Unterkieferadapters, ermittelt.

Der Unterkieferadapter wird sodann vom Kiefer bzw. von der Zahnreihe des Patienten abgenommen, und es wird in einem weiteren Verfahrenschritt d) der Bissträger anhand der Impression der Unterkiefer-Zahnreihe des Patienten in der Abdruckmasse auf dem Bissträger mit einem Unterkiefermodell des Patienten verbunden.

Im Rahmen eines weiteren Verfahrensschritts e) werden sodann der Bissträger und das in der Impression des Bissträgers angeordnete Unterkiefermodell im Montagestand angeordnet. Die Anordnung von Bissträger und Unterkiefermodell im Montagestand erfolgt dabei mittels Verbindung der Bissträger-Kupplungseinrichtung mit der zur Kupplungseinrichtung des Bissträgers formkomplementären Kupplungsaufnahme am Montagestand.

Mit anderen Worten bedeutet dies, dass Bissträger und Unterkiefermodell eine vorläufige räumlich definierte Fixierung relativ zur Scharnierachse des Montagestands, bzw. relativ zu einer ggf. mit der Scharnierachse verbundenen Unterkiefer-Montageplatte des Montagestands erfahren. Dabei befinden sich die Kupplungsaufnahme am Montagestand sowie das damit anhand des Bissträgers verbundene Unterkiefermodell zunächst noch in einer Neutrallage relativ zur Scharnierachse des Montagestands; die Position der Scharnierachse des Montagestands relativ zum Unterkiefermodell stimmt somit noch nicht mit der tatsächlichen Scharnierachsenlage des Patienten relativ zum Modell überein. Anhand der vorherigen Scharnierachsenbestimmung ist jedoch die genaue räumlichen Beziehung der Kupplungseinrichtung des Bissträgers - und damit auch die räumliche Beziehung der mit der Kupplungseinrichtung verbundenen Kupplungsaufnahme des Montagestands - relativ zur tatsächlichen Patienten-Scharnierachse bereits bekannt.

Mit diesem Hintergrund erfolgt ebenfalls im Verfahrensschritt e) eine Angleichung der räumlichen Relativposition zwischen der Montagestand-Kupplungsaufnahme und der Scharnierachse des Montagestands an die bei der Registrierung ermittelte räumlichen Relativposition zwischen der Patienten-Scharnierachse und der Kupplungseinrichtung des Unterkieferadapters bis zur Deckungsgleichheit zwischen Patienten-Scharnierachse und Montagestand-Scharnierachse relativ zum Unterkiefermodell.

Dies bedeutet mit anderen Worten, dass die räumliche Position der Kupplungsaufnahme des Montagestands sowie des an der Kupplungsaufnahme formschlüssig angeordneten Bissträgers - zusammen mit dem am Bissträger definiert angeordneten Unterkiefermodell - relativ zur Scharnierachse des Montagestands im Verfahrenschritt e) anhand der im Verfahrenschritt c) ermittelten Scharnierachsenlage genau so einjustiert wird, dass sich die Kupplungsaufnahme des Montagestands relativ zur Scharnierachse des Montagestands räumlich in exakt derselben Relativbeziehung befindet wie die Kupplungseinrichtung des Bissträgers relativ zur Scharnierachse des Patienten.

Dies kann - lediglich beispielsweise - dadurch erfolgen, dass die Kupplungsaufnahme des Montagestands, und damit auch der Bissträger mit dem darin angeordneten Unterkiefermodell, und die Scharniergelenkpunkte des Montagestands so lange relativ zueinander verschoben werden, bis sich die räumliche Relativposition zwischen der Kupplungsaufnahme des Montagestands und der durch die Scharniergelenkpunkte definierten Montagestand-Scharnierachse genau mit der zuvor ermittelten räumlichen Relativposition zwischen der Kupplungseinrichtung des Bissträgers und der Patienten-Scharnierachse decken. Damit ist nach Durchführung des Verfahrensschritts e) eine exakte Übereinstimmung des Koordinatensystems am Montagestand mit dem Koordinatensystem des Patienten-Unterkiefers erreicht, soweit die Relativposition zwischen Unterkiefer und Patienten-Scharnierachse betroffen ist.

Die Erfindung wird im Übrigen auch dann verwirklicht, wenn die beschriebene Reihenfolge der Vorgehensweise im Verfahrensschritt e) vertauscht wird, wenn also zuerst die Angleichung der räumlichen Relativposition der Montagestand-Kupplungsaufnahme gegenüber der Montagestand-Scharnierachse an die bei der Registrierung ermittelte räumliche Relativposition zwischen Patienten-Scharnierachse und Unterkieferadapter-Kupplungseinrichtung erfolgt, und erst im Anschluss daran Bissträger und Unterkiefermodell mittels Verbindung der Unterkieferadapter-Kupplungseinrichtung und Montagestand-Kupplungsaufnahme im Montagestand angeordnet werden.

Schließlich erfolgt in einem weiteren Verfahrenschritt f) die Fixierung des Unterkiefermodells auf einer Unterkiefer-Montageplatte bzw. auf dem Unterteil des Montagestands oder des Artikulators, beispielsweise durch Verbindung des Unterkiefermodells mit der Montageplatte anhand einer aushärtbaren Gips-Montagemasse.

Im Anschluss daran kann in für sich genommen bekannter Weise die Positionierung eines Oberkiefermodells des Patienten relativ zu dem im Montagestand bzw. Artikulator angeordneten und positionierten Unterkiefermodell - beispielsweise anhand eines am Patienten in Okklusionsstellung abgenommenen zentrischen Registrats - sowie die Fixierung des Oberkiefermodells auf einer zugehörigen Oberkiefer-Montageplatte bzw. auf einem Oberteil des Montagestands oder Artikulators erfolgen.

Das erfindungsgemäße Verfahren weist somit zunächst einmal den entscheidenden Vorteil auf, dass eine Lokalisierung der Scharnierachse des Patienten lediglich relativ zum Unterkiefer - insbesondere relativ zur Kupplungseinrichtung des Unterkieferadapters - erforderlich ist. Denn da die Kupplungseinrichtung des Unterkieferadapters bzw. Bissträgers und die Kupplungsaufnahme des Montagestands zueinander formkomplementär ausgebildet und damit reproduzierbar räumlich definiert aneinander zur Anlage bringbar sind, ist somit die räumliche Lage der Scharnierachse des Patienten auch relativ zur Kupplungsaufnahme eines Montagestands oder Artikulators bekannt, sobald die Kupplungseinrichtung des Bissträgers mit der Kupplungsaufnahme des Montagestands oder Artikulators verbunden ist.

Die am Patienten vorhandene, im Verfahrenschritt c) ermittelte räumliche Relativbeziehung zwischen dem Unterkieferadapter - insbesondere zwischen der Kupplungseinrichtung des Bissträgers des Unterkieferadapters - und der Patienten-Scharnierachse wird erfindungsgemäß somit lediglich durch Anordnung des Bissträgers mittels Kupplungseinrichtung im Montagestand und durch die Angleichung der räumlichen Relativposition der Montagestand-Kupplungsaufnahme und der Montagestand-Scharnierachse an die zuvor bestimmte Patienten-Scharnierachsenlage relativ zur Bissträger-Kupplungseinrichtung in den Montagestand bzw. Artikulator übertragen. Dies kann dank der Erfindung nun mit praktisch beliebig hoher Genauigkeit sowie auf gleichzeitig bislang unerreicht einfache, reproduzierbare Weise erfolgen.

Gleichzeitig entfällt vollständig die bisher und im Stand der Technik stets notwendige, aufwändige und gleichzeitig fehlerbehaftete Geometrieübertragung mittels arbiträren Gesichtsbogens (bei mittelwertiger Achsenlokalisierung) oder mittels terminalen Gesichtsbogens (bei kinematischer Achsenbestimmung).

Der Erfindung liegt mit anderen Worten primär die wegweisende Erkenntnis zugrunde, dass eine Übertragung der geometrischen Verhältnisse am Schädel, insbesondere am Kiefer des Patienten, mit entscheidendem Vorteil sowie unter kompletter Umgehung der zumeist ungenauen und zudem aufwändigen Übertragung der Schädelgeometrie mittels Gesichtsbogen dadurch erfolgen kann, dass anstelle der schädelbezogenen Übertragung unmittelbar die räumliche Relativbeziehung zwischen der Unterkiefer-Zahnreihe und der Patienten-Scharnierachse ermittelt und zum Geometrietransfer herangezogen wird. Dies gilt umso mehr, als die Scharnierachse aufgrund der anatomischen Verhältnisse des Kiefergelenks mit ihren *am Unterkiefer* angeordneten Kondylen geometrisch ausschließlich *dem Unterkiefer* genau zugeordnet ist, während sich die Scharnierachsenlage relativ zum Oberkiefer in Abhängigkeit der Position des Unterkiefers in erheblichem Maße verändern kann. Bereits aus diesem Grund ist die im Stand der Technik durchweg verwendete Übertragung der Scharnierachsenlage anhand des Versuchs, diese am Schädel anstatt wie bei der Erfindung am Unterkiefer abzugreifen, im Gegensatz zum erfindungsgemäßen Verfahren unweigerlich fehlerbehaftet.

Die Erfindung wird dabei zunächst einmal verwirklicht unabhängig davon, auf welche Weise im Verfahrenschritt c) die Scharnierachsenbestimmung erfolgt. So kann die Scharnierachsenbestimmung im Verfahrenschritt c) beispielsweise anhand verschiedener aus dem Stand der Technik für sich genommen bekannter, mechanischer oder elektronischer Verfahren zur kinematischen Achsenbestimmung erfolgen. Entscheidend ist lediglich, dass die Ermittlung der räumlichen Lage der Patienten-Scharnierachse lediglich relativ zum Unterkiefer, insbesondere lediglich relativ zur Kupplungseinrichtung des Bissträgers, zu erfolgen hat.

Gemäß besonders bevorzugter Ausführungsformen des erfindungsgemäßen Verfahrens erfolgt die Scharnierachsenbestimmung im Verfahrenschritt c) jedoch mittels berührungsloser Messung einer Öffnungsbewegung des Unterkiefers, bzw. anhand berührungsloser Messung einer Relativbewegung zwischen Unterkiefer und Schädel des Patienten. Diese berührungslose Messung ist vorteilhaft insofern, als auf diese Weise eine praktisch kräftefreie und damit unverfälschte Messung erfolgen kann, bei der zudem jegliche Rückwirkungen auf die natürlichen Kieferbewegungen des Patienten so gut wie ausgeschlossen sind.

Die Scharnierachsenbestimmung mittels Messung einer Relativbewegung zwischen Unterkiefer und Schädel ist besonders vorteilhaft insofern, als auf diese Weise etwaige Kopfeigenbewegungen des Patienten erfasst und messtechnisch eliminiert werden können; der Kopf des Patienten muss somit nicht festgeschnallt oder anderweitig unverrückbar fixiert werden, was dem Komfort des Patienten und damit der Bereitschaft zur Mitwirkung durch den Patienten mit großem Vorteil entgegenkommt.

Gemäß einer weiteren, besonders bevorzugten Ausführungsform des erfindungsgemäßen Verfahrens umfasst die Scharnierachsenbestimmung im Verfahrenschritt c) auch die Ermittlung einer schädelbezogenen Referenzebene und eines zugehörigen, durch die räumliche Position des Unterkiefers bestimmten Referenzwinkels relativ zur schädelbezogenen Referenzebene. Bei dieser Ausführungsform erfolgt im Verfahrenschritt e) - mittels dementsprechender Justierung der hierzu verstellbar ausgeführten Referenzwinkelposition der Montagestand-Kupplungsaufnahme und damit auch des an der Kupplungsaufnahme angeordneten Bissträgers gegenüber einer Referenzebene des Montagestands - eine Angleichung von Kupplungsaufnahme, Bissträger und Unterkiefermodell an den bei der Registrierung im Verfahrenschritt c) ermittelten Referenzwinkel.

Mit dieser Ausführungsform kann infolge der damit ermöglichten, exakten Übertragung auch der Schädel-Referenzebene sowie des patientenspezifischen Referenzwinkels in den Montagestand bzw. Artikulator insbesondere auch Voll-Artikulation einschließlich der gesamten, auch auf die Referenzebene bezogenen Kiefergelenksgeometrie, wie beispielsweise Kondylenbahnneigung, Bennettwinkel, Retrusuion/ Surtrusion, und/oder Immediate Side Shift, erfolgen.

Die berührungslose Scharnierachsenbestimmung erfolgt gemäß einer weiteren, ebenfalls bevorzugten Ausführungsform des erfindungsgemäßen Verfahrens dadurch, dass zur berührungslosen Messung ein Messträger mit dem Unterkieferadapter verbunden wird, wobei der Messträger Markerelemente zur berührungslosen Positionsbestimmung aufweist. Diese Ausführungsform besitzt den Vorteil, dass die berührungslose Scharnierachsenbestimmung mittels an dem Messträger angeordneter Reflektoren bzw. Marker insbesondere durch optische Bilderkennung und anschließende digitale Bildverarbeitung erfolgen kann.

Mit diesem Hintergrund ist es gemäß einer weiteren bevorzugten Ausführungsform des erfindungsgemäßen Verfahrens vorgesehen, dass die Verbindung des Messträgers mit dem Unterkieferadapter mittels einer am Messträger angeordnete Kupplungsaufnahme erfolgt. Dabei ist die Kupplungsaufnahme des Messträgers formkomplementär zur Kupplungseinrichtung des Unterkieferadapters (also wiederum formkorrespondierend zur Kupplungsaufnahme des Montagestands) ausgebildet, und es ist ferner die räumliche Position der Markerelemente des Messträgers relativ zur Kupplungsaufnahme des Messträgers bekannt.

Auf diese Weise ergibt sich ein einfaches, modulares System zur Verbindung und Trennung auch von Unterkieferadapter und Messträger zum Zweck der berührungslosen bzw. optischen Registrierung. Da die räumliche Position der Markerelemente relativ zur Kupplungsaufnahme des Messträgers bekannt ist, und da bei der berührungslosen bzw. optischen Messung die räumliche Position der Markerelemente relativ zur Patienten-Scharnierachse bestimmt wird, ist nach der Messung somit die Scharnierachsenlage auch relativ zur Kupplungsaufnahme des Messträgers und damit wiederum zur Kupplungseinrichtung des Bissträgers am Unterkieferadapter bekannt, da die Kupplungseinrichtung des Unterkieferadapters bei der Messung mit der Kupplungsaufnahme des Messträgers verbunden ist.

Anhand der somit berührungslos ermittelten Patienten-Scharnierachsenlage relativ zur Kupplungseinrichtung des Bissträgers am Unterkieferadapter kann bei gegebener räumlicher Position einer Kupplungsaufnahme mittels Anordnung des Bissträgers in der Kupplungsaufnahme jederzeit die Scharnierachsenlage im Raum wiederum relativ zu der Kupplungsaufnahme rekonstruiert werden. Dies gilt insbesondere für die Situation im Montagestand bzw. Artikulator. Sofern somit an einem Montagestand bzw. Artikulator eine Kupplungsaufnahme angeordnet ist, kann der Bissträger mit den Zahnimpressionen, also mit dem Bissschlüssel, mit dieser Kupplungsaufnahme des Montagestands bzw. Artikulators verbunden werden.

Ist das zugehörige Kiefermodell in den Zahnimpressionen des Bissschlüssels auf dem Bissträger angeordnet, so ist nur noch die Montagestand-Gelenkachse in die bei der Messung ermittelte Relativposition zur Kupplungseinrichtung des Bissträgers zu bringen, die bei im Montagestand montiertem Bissträger mit der Kupplungsaufnahme des Montagestands übereinstimmt.

Somit lässt sich im Ergebnis - lediglich mittels Weitergabe des Bissträgers mit dem Bissschlüssel sowie zusammen mit den zugehörigen Daten zur am Patienten ermittelten Scharnierachsenlage beispielsweise an das Labor - die exakte räumliche Relativposition zwischen Patienten-Unterkiefer und Patienten-Scharnierachse auch am Montagestand bzw. Artikulator auf einfachste, genaue und reproduzierbare Weise wieder herstellen.

Vorzugsweise erfolgt dabei die berührungslose Bestimmung der Patienten-Scharnierachsenlage mittels optischer Bildverfolgung der Markerelemente durch zumindest eine Bildaufnahmekamera. Dies besitzt insbesondere den Vorteil, dass mehrere Markerelemente durch ein und dieselbe Kamera erfasst und verfolgt werden können; ferner kann die Messung mit geeigneter Optik und Kameraauflösung aus einem gewissen Abstand erfolgen, wodurch insbesondere den Patienten möglicherweise irritierende Messapparaturen in unmittelbarer Nähe des Kopfes des Patienten vermieden werden können.

Mit dem Hintergrund der berührungslosen bzw. optischen Messung ist es gemäß einer weiteren bevorzugten Ausführungsform des erfindungsgemäßen Verfahrens vorgesehen, dass die berührungslose Messung digitale Bildverarbeitung der Abbilder der von der Kamera erfassten Markerelemente einschließt. Dabei umfasst die digitale Bildverarbeitung zumindest eine Nachschärfungsoperation, zum Beispiel eine Houghtransformation. Anhand der digitalen Bildverarbeitung mit Nachschärfungsoperation lässt sich die Genauigkeit der Positionsbestimmung der von der Kamera erfassten Markerelemente fast beliebig steigern, insbesondere wenn zudem strukturiert gestaltete Marker verwendet werden, die beispielsweise mehrere konzentrische Kreise und/oder radiale Kontraststrukturen umfassen, da sich auf diese Weise der Informationsgehalt der von der Bildaufnahmekamera erzeugten Abbilder der Markerelemente vervielfachen lässt.

Ferner ergibt sich bei geeigneter grafischer bzw. geometrischer Gestaltung der Marker zudem die Möglichkeit, die dreidimensionale räumliche Position der Marker relativ zur Bildaufnahmekamera zu ermitteln, einschließlich des Abstands, des Winkels, der Kippung, der Drehung usw. der Marker relativ zum Ort der Bildaufnahmekamera. Auf diese Weise kann somit insbesondere auch eine vollständige automatische Kalibrierung der Kamera relativ zu den Markern im dreidimensionalen Raum erfolgen, vgl. auch die nicht veröffentlichte Patentanmeldung 10 2006 004 197.6, auf die hiermit ausdrücklich Bezug genommen wird und die in ihrem Offenbarungsgehalt hinsichtlich der grafischen Gestaltung, optischen Erfassung, Verfolgung und räumlichen Lokalisierung von Markerelementen sowie hinsichtlich der automatischen Kalibrierung eines Kamera-Messsystems in die Offenbarung der vorliegenden Erfindung einbezogen wird.

Dies führt auch zu dem weiteren entscheidenden Vorteil, dass es zur genauen Erfassung der Relativbewegung des Unterkiefers und der daraus abgeleiteten Patienten-Scharnierachsenlage nicht notwendig ist - abgesehen von einem federleichten Messbogen am Unterkiefer -, irgendwelche Messapparaturen am Kopf des Patienten zu verankern oder festzuschnallen, die den Patienten irritieren und damit das Messergebnis verfälschen könnten, bzw. die die Mitwirkung des Patienten beim Scharnierachsen-Messvorgang erschweren könnten.

Die Erfindung lässt sich dabei zunächst einmal unabhängig davon verwirklichen, wie der Messträger geometrisch gestaltet oder konstruktiv ausgeführt ist. So ist es beispielsweise denkbar wie auch konstruktiv möglich, den Messträger vergleichsweise kompakt auszubilden, lediglich im unmittelbaren Bereich der Kupplungseinrichtung des Unterkieferadapters anzuordnen, und die Positionen der auf dem Messträger somit im Wesentlichen perioral angeordneten Markerelemente durch optische Verfolgung mittels einer oder mehrerer Kameras festzustellen.

Gemäß einer besonders bevorzugten Ausführungsform des erfindungsgemäßen Verfahrens ist der Messträger jedoch als Unterkiefer-Messbogen ausgebildet, wobei die Markerelemente zur berührungslosen Positionsbestimmung kiefergelenksnah auf dem Messbogen angeordnet sind.

Auf diese Weise kann einerseits mittels mehrerer, beispielsweise jeweils beidseitig des Kiefergelenks am Unterkiefermessbogen unter verhältnismäßig großem Abstand - und damit mit einer genauen Messbasis - angeordneter Marker eine hochgenaue Scharnierachsenbestimmung erfolgen. Andererseits können bei dieser kiefergelenksnahen Anordnung der Messbogenmarker etwaige zusätzliche Referenzmarker zur Ermittlung der Referenzebene und/oder zur Erfassung und messtechnischen Eliminierung von Schädelbewegungen des Patienten ebenfalls kiefergelenksnah am Schädel des Patienten angeordnet werden, und es kann somit eine Erfassung sowohl der Messbogenmarker als auch der Referenzmarker jeweils mit ein und derselben Sensoreinrichtung bzw. Kamera erfolgen.

Dies bedeutet mit anderen Worten, dass eine vollständige räumliche Erfassung der Position und Lage des Messbogens (und damit auch der Patienten-Scharnierachse), ferner die gleichzeitige Erfassung der schädelbezogenen Referenzebene und des Referenzwinkels wie auch zudem die messtechnische Eliminierung von Schädelbewegungen des Patienten, lediglich bereits anhand zweier auf die Region der beiden Kiefergelenke gerichteter Bildaufnahmekameras erfolgen kann.

Zur Verwirklichung des erfindungsgemäßen Verfahrens ist es zunächst einmal nicht wesentlich, auf welche Weise im Montagestand oder Artikulator im Verfahrenschritt e) die Angleichung der räumlichen Relativposition der Kupplungsaufnahme, ggf. zusammen mit Bissträger und Unterkiefermodell, gegenüber der Scharnierachse des Montagestands erfolgt, solange sichergestellt ist, dass nach der Angleichung die räumliche Relativbeziehung zwischen der Kupplungsaufnahme des Montagestands und der Montagestand-Scharnierachse mit der zuvor am Patienten bestimmten räumlichen Relativbeziehung zwischen der Kupplungseinrichtung des Unterkieferadapters und der Patienten-Scharnierachse übereinstimmt.

Insbesondere kann die Angleichung der räumlichen Relativposition zwischen Kupplungsaufnahme und Montagestand-Scharnierachse an die entsprechende, gemessene räumliche Relativposition zwischen Unterkieferadapter-Kupplungseinrichtung und Patienten-Scharnierachse im Montagestand anhand beispielsweise manueller mechanischer Justierung entweder der Kupplungsaufnahme oder der Montagestand-Scharnierachse erfolgen. Der Montagestand kann hierzu beispielsweise so eingerichtet sein, dass sich die beiden Gelenkpfannen mittels entsprechender, am Montagestand angeordneter, justier- und feststellbarer Parallelführungen jeweils in allen drei Raumrichtungen so lange verstellen lassen, bis Übereinstimmung zwischen der Montagestand-Scharnierachse und der Patienten-Scharnierachse relativ zur Kupplungsaufnahme am Montagestand besteht.

Gemäß einer bevorzugten Ausführungsform des erfindungsgemäßen Verfahrens jedoch ist vorgesehen, dass im Verfahrenschritt e) die Angleichung der räumlichen Relativposition der Kupplungsaufnahme, ggf. zusammen mit an der Kupplungsaufnahme bereits angeordnetem Bissträger und Unterkiefermodell, im Montagestand gegenüber der Scharnierachse des Montagestands durch am Montagestand angeordnete elektromechanische Aktuatoren, beispielsweise durch Servomotoren, erfolgt.

Konstruktiv kann dies beispielsweise - jedoch keineswegs ausschließlich - so verwirklicht sein, dass eine servomotorische Verstellung der beiden die Montagestand-Scharnierachse definierenden Scharniergelenkpunkte bzw. Gelenkpfannen des Montagestands erfolgt so lange, bis Übereinstimmung zwischen der Montagestand-Scharnierachse und der Patienten-Scharnierachse relativ zur Kupplungsaufnahme am Montagestand erreicht ist.

Diese Ausführungsform bietet eine besonders hohe Zuverlässigkeit und einen besonders hohen Bedienkomfort für den Benutzer aufgrund einer damit erreichbaren weitgehenden Automatisierung der Einstellungen des Montagestands. Dies gilt insbesondere dann, wenn die Verschiebung der Montagestand-Scharnierachse zur Montagestand-Kupplungsaufnahme selbsttätig anhand der bei der Registrierung ermittelten und beispielsweise an das zahntechnische Labor weitergegebenen Daten zur räumlichen Lage der Scharnierachse des Patienten relativ zur Kupplungseinrichtung des Unterkieferadapters erfolgt.

Gemäß einer weiteren, gegenüber der beispielsweise servomotorischen Mechanisierung des Montagestands alternativen Ausführungsform des erfindungsgemäßen Verfahrens ist vorgesehen, dass die Anordnung von Bissträger und Unterkiefermodell im Montagestand sowie die Angleichung der räumlichen Relativposition der Montagestand-Kupplungsaufnahme und des darin angeordneten Bissträgers und Unterkiefermodells im Verfahrenschritt e) mit Hilfe eines Unterkiefertransferbogens erfolgt. Dabei umfasst der Unterkiefertransferbogen zwei Achsmarkierelemente, beispielsweise zwei Achsmarkierspitzen, sowie eine gleichzeitig die Montagestand-Kupplungsaufnahme bildende Kupplungsaufnahme für die Kupplungseinrichtung des Bissträgers, wobei die räumliche Relativposition zwischen der Verbindungsgeraden der Achsmarkierelemente und der Kupplungseinrichtung des Unterkiefertransferbogens am Unterkiefertransferbogen verstellbar und in Übereinstimmung mit der im Verfahrenschritt c) relativ zur Kupplungseinrichtung des Bissträgers ermittelten Patienten-Scharnierachsenlage fixiert ist.

Dabei erfolgt gemäß dieser Ausführungsform die Anordnung von Bissträger und Unterkiefermodell im Montagestand sowie die Angleichung der räumlichen Relativposition der Montagestand-Kupplungsaufnahme relativ zur Montagestand-Scharnierachse im Verfahrenschritt e) mit Hilfe des Unterkiefertransferbogens dergestalt, dass die Achsmarkierelemente des Unterkiefertransferbogens mit auf der Scharnierachse des Montagestands angeordneten Achsaufnahmepunkten des Montagestands verbunden werden, bzw. mit diesen Achsaufnahmepunkten in Deckung gebracht werden.

Dies bedeutet mit anderen Worten, dass gemäß dieser Ausführungsform des erfindungsgemäßen Verfahrens die räumliche Relativbeziehung zwischen der Patienten-Scharnierachse und der Kupplungseinrichtung des Bissträgers mechanisch in Form der am Unterkiefertransferbogen eingestellten und fixierten Relativposition zwischen den Achsmarkierspitzen des Unterkiefertransferbogens und der Kupplungseinrichtung des Unterkiefertransferbogens auf dem Unterkiefertransferbogen codiert ist. Diese Codierung des Unterkiefertransferbogens erfolgt dabei vorzugsweise unmittelbar nach der Scharnierachsenbestimmung, zum Beispiel mittels Verschiebung der Markierspitzen des Unterkiefertransferbogens bis zur Deckungsgleichheit der Markierspitzen am Unterkiefertransferbogen mit der ermittelten Patienten-Scharnierachse. Dabei kann gleichzeitig auch eine Übertragung des am Patienten ermittelten patientenspezifischen Referenzwinkels bezüglich einer Schädel-Referenzebene in den Montagestand erfolgen, indem im Bereich der Markierspitzen des Unterkiefertransferbogens ein Winkeleinstellelement vorgesehen ist, mit Hilfe dessen die Referenzwinkelposition des Unterkiefertransferbogens am Montagestand kontrolliert bzw. eingestellt werden kann.

Mit diesem Hintergrund ist gemäß einer weiteren bevorzugten Ausführungsform des erfindungsgemäßen Verfahrens vorgesehen, dass der Unterkiefermessbogen gleichzeitig den Unterkiefertransferbogen bildet. Somit kann der mechanische Transfer der Patienten-Scharnierachsenlage in den Montagestand bzw. Artikulator ohne Austausch des Unterkieferbogens anhand desselben Unterkieferbogens durchgeführt werden, mit dem auch die Scharnierachsenbestimmung selbst durchgeführt wurde.

Gemäß einer weiteren Ausführungsform des erfindungsgemäßen Verfahrens ist vorgesehen, dass die Kupplungseinrichtung des Unterkieferadapters relativ zu den Zahnkontaktflächen des Unterkieferadapters, vorzugsweise mittels Kugelgelenk, justierbar am Unterkieferadapter angeordnet ist.

Diese Ausführungsform hat den Hintergrund, dass bei dem erfindungsgemäßen Verfahren in seiner allgemeinsten Form die Relativbeziehung zwischen der Patienten-Scharnierachse und der Kupplungseinrichtung des Unterkieferadapters auf den Montagestand übertragen wird. Hierzu ist es vorteilhaft, wenn sich die Kupplungseinrichtung des Unterkieferadapters relativ zu den Zahnkontaktflächen des Unterkieferadapters bereits am Patienten so in die Nähe der Standardposition der Kupplungseinrichtung betreffend die Scharnierachsen-Nulllage des Montagestands bringen lässt, dass später am Montagestand nur noch geringfügige Verstellungen vorgenommen werden müssen, um die Montagestand-Scharnierachse mit der Patienten-Scharnierachse zur Deckung zu bringen.

Ferner kann auf diese Weise eine einfache Anpassung des Unterkieferadapters an unterschiedliche Kiefer- und Schädelgeometrien verschiedener Patienten erfolgen. Dies ist insbesondere dann von Bedeutung, wenn ein standardisierter Unterkiefermessbogen und/oder ein paraokklusaler Registrierbehelf zur Scharnierachsenbestimmung verwendet wird, da in diesem Fall ansonsten - also ohne justierbare Kupplungseinrichtung - kaum Möglichkeiten zur Variation der Stellung des Unterkiefermessbogens relativ zum Zahnbogen des Unterkiefers bzw. relativ zum Unterkiefer des Patienten, und damit zur ungefähren Einregulierung des Unterkiefermessbogens vor der Messung, bestehen würden.

Nach einer weiteren Ausführungsform des erfindungsgemäßen Verfahrens ist der Bissträger des Unterkieferadapters als okklusale Bissgabel ausgebildet. Bei dieser Ausführungsform kann insbesondere ein Kugelgelenk oder eine andere einstellbare Verbindung zwischen der Kupplungseinrichtung des Unterkieferadapters und der Zahnkontaktfläche des Unterkieferadapters entfallen. Denn eine okklusale Bissgabel bietet im Allgemeinen genügend Spielraum zur ungefähren Einregulierung dergestalt, dass der Unterkiefermessbogen im Vorfeld der Scharnierachsenbestimmung sich ungefähr in der korrekten Messposition relativ zum Kiefer des Patienten befindet. Bei ausschließlicher Verwendung einer okklusalen Bissgabel eignet sich diese Ausführungsform des erfindungsgemäßen Verfahrens insbesondere für eine vereinfachte, robuste und kostengünstige Registrierung bzw. Scharnierachsenbestimmung mit nachfolgendem Geometrietransfer in den Montagestand.

Mit diesem Hintergrund ist es gemäß einer weiteren Ausführungsform des erfindungsgemäßen Verfahrens vorgesehen, dass in einem zusätzlichen Verfahrenschritt c') Abdruckmasse zusätzlich auch auf der oberkieferseitigen Zahnkontaktfläche des als okklusale Bissgabel ausgebildeten Bissträgers angeordnet wird. Nachfolgend erfolgt in einem weiteren Verfahrenschritt c") die Erzeugung einer Impression des Oberkiefer-Zahnbogens in der auf der oberkieferseitigen Zahnkontaktfläche des Bissträgers angeordneten Abdruckmasse.

Dies bedeutet mit anderen Worten, dass die Relativposition von Oberkiefer *und* Unterkiefer - anhand der Impressionen beider Zahnbögen - auf dem okklusalen Bissträger codiert wird. Somit kann - lediglich anhand Übergabe des Bissträgers zusammen mit den Daten zur Patienten-Scharnierachsenlage beispielsweise an den Zahntechniker - sowohl das Unterkiefermodell als auch das Oberkiefermodell des Patienten exakt positions- und lagerichtig im Montagestand bzw. Artikulator angeordnet und fixiert werden.

Gemäß einer weiteren - gegenüber der vorstehenden alternativen - Ausführungsform des erfindungsgemäßen Verfahrens ist der Bissträger des Unterkieferadapters als paraokklusaler Registrierbehelf ausgebildet. Auf diese Weise kann die Kiefergelenks-Registrierung mit besonders großer Genauigkeit erfolgen, da bei der Verwendung eines paraokklusalen Registrierbehelfs keinerlei Interferenzen und keinerlei unnatürlicher okklusaler Abstand induziert werden.

Nach einer weiteren bevorzugten Ausführungsform des erfindungsgemäßen Verfahrens ist vorgesehen, dass der Unterkieferadapter eine okklusale Bissgabel mit Kupplungseinrichtung als Bissträger sowie ferner einen paraokklusalen Registrierbehelf mit einem Zwischenadapter umfasst. Dabei weist der Zwischenadapter eine Kupplungsaufnahme für die Kupplungseinrichtung der okklusalen Bissgabel auf. Gemäß dieser Ausführungsform wird im Verfahrenschritt c) zur Scharnierachsenbestimmung zunächst einmal der paraokklusale Registrierbehelf mit dem Zwischenadapter verwendet, und es wird dabei die räumliche Lage der Patienten-Scharnierachse relativ zur Kupplungsaufnahme des Zwischenadapters bestimmt.

Gemäß dieser Ausführungsform weist das Verfahren die nachfolgend dargestellten zusätzlichen Verfahrensschritte c₁) und c₂) auf. In einem ersten zusätzlichen Verfahrenschritt c₁) wird nach der Scharnierachsenbestimmung die okklusale Bissgabel mittels des Zwischenadapters mit dem noch an der Unterkiefer-Zahnreihe des Patienten angeordneten paraokklusalen Registrierbehelf verbunden. Hierbei wird eine weitere Impression des Unterkiefer-Zahnbogens des Patienten in auf der Zahnkontaktfläche der okklusalen Bissgabel angeordneter Abdruckmasse erzeugt.

Mit anderen Worten bedeutet dies, dass hierdurch im Verfahrenschritt c₁) die zuvor in Verfahrenschritt c) ermittelte räumliche Relativposition zwischen der Patienten-Scharnierachse und der Kupplungsaufnahme des Zwischenadapters, mittels der Anordnung der okklusalen Bissgabel an der Kupplungsaufnahme des Zwischenadapters, nun auch der Kupplungseinrichtung der okklusalen Bissgabel zugeordnet wird, wobei gleichzeitig die räumliche Relativposition auch des Unterkiefer-Zahnbogens des Patienten relativ zur Kupplungsaufnahme des Zwischenadapters und damit auch zur Kupplungseinrichtung der okklusalen Bissgabel auf die okklusale Bissgabel codiert wird.

Somit stellt im Ergebnis auch in diesem Fall die okklusale Bissgabel wieder den Bissträger dar, auf dem als Informationsträger anhand der Zahnimpressionen als Bissschlüssel genau die während der Scharnierachsenbestimmung vorhandene räumliche Relativposition zwischen Patienten-Scharnierachse und Kupplungsaufnahme des Zwischenadapters codiert bzw. gespeichert ist.

Anschließend erfolgt in einem weiteren Verfahrenschritt c₂) eine Trennung der okklusalen Bissgabel vom paraokklusalen Registrierbehelf sowie die Entfernung der okklusalen Bissgabel und des paraokklusalen Registrierbehelfs von Unterkiefer des Patienten.

Somit ist bei dieser Ausführungsform des erfindungsgemäßen Verfahrens nach den Verfahrensschritten c₁) und c₂) die räumliche Relativbeziehung zwischen Patienten-Scharnierachse, Unterkiefer-Zahnbogen und Kupplungseinrichtung wieder auf lediglich der okklusalen Bissgabel - zusammen mit dem zugehörigen Scharnierachsen-Datensatz - codiert.

Demnach kann auch in diesem Fall der Transfer von Kiefermodell und Kiefergeometrie in den Montagestand lediglich anhand Weitergabe der okklusalen Bissgabel als Bissträger zusammen mit dem Scharnierachsen-Datensatz erfolgen, obwohl gemäß dieser Ausführungsform des erfindungsgemäßen Verfahrens die eigentliche Registrierung bzw. Scharnierachsenbestimmung nicht mit der okklusalen Bissgabel, sondern besonders genau und störungsfrei mit dem paraokklusalen Registrierbehelf erfolgte.

Mit diesem Hintergrund ist es gemäß einer weiteren, besonders bevorzugten Ausführungsform des erfindungsgemäßen Verfahrens vorgesehen, dass der Zwischenadapter des paraokklusalen Registrierbehelfs relativ zu den Zahnkontaktflächen des paraokklusalen Registrierbehelfs beispielsweise mittels Kugelgelenk justierbar mit dem paraokklusalen Registrierbehelf verbunden ist. Auch dies dient wieder dazu, im Vorfeld der Kiefergelenksregistrierung bzw. Scharnierachsenbestimmung eine ungefähre Justierung der am Zwischenadapter angeordneten Kupplungsaufnahme vorzunehmen, so dass später am Montagestand nur noch geringfügige Verstellungen vorgenommen werden müssen, um das Montagestand-Koordinatensystem mit dem Unterkiefer-Koordinatensystem des Patienten in Übereinstimmung zu bringen.

Ferner kann auf diese Weise im Vorfeld der Scharnierachsenbestimmung wieder eine einfache Anpassung des Unterkieferadapters auch an unterschiedliche Kiefer- und Schädelgeometrien verschiedener Patienten erfolgen, was insbesondere dann von Bedeutung ist, wenn zur Scharnierachsenbestimmung am Patienten ein standardisierter, starrer Unterkiefermessbogen verwendet wird.

Gemäß einer weiteren, ebenfalls bevorzugten Ausführung des erfindungsgemäßen Verfahrens ist dabei vorgesehen, dass der Zwischenadapter vom paraokklusalen Registrierbehelf trennbar ist. Zu diesem Zweck umfassen der Zwischenadapter eine Verbindungsaufnahme und der paraokklusale Registrierbehelf eine zu der Verbindungsaufnahme formkomplementäre Verbindungseinrichtung.

Hierbei sind vorzugsweise zumindest zwei gegeneinander austauschbare, bezüglich Verbindungsaufnahme und Kupplungsaufnahme zueinander maß- und formkorrespondierende Zwischenadapter vorhanden, wobei der erste Zwischenadapter gleichzeitig den Messträger, also beispielsweise den Unterkiefermessbogen,bildet bzw. mit diesen verbunden ist, mit dem die beispielsweise berührungslose Scharnierachsenbestimmung erfolgt. Ein weiterer vorhandener Zwischenadapter hingegen stellt im Wesentlichen lediglich eine Kupplungsaufnahme für die okklusale Bissgabel sowie eine Verbindungsaufnahme für den paraokklusalen Registrierbehelf zum Einsatz in Verfahrenschritt c₁) bereit.

Dies bedeutet mit anderen Worten, dass die Scharnierachsenbestimmung gemäß dieser Ausführungsform des erfindungsgemäßen Verfahrens mittels des paraokklusalen Registrierbehelfs erfolgen kann, dergestalt, dass der paraokklusale Registrierbehelf an der Verbindungsaufnahme des beispielsweise als Unterkiefermessbogen ausgebildeten ersten Zwischenadapters angeordnet wird, wonach die Scharnierachsenbestimmung bzw. Kiefergelenksregistrierung erfolgt. Im Anschluss hieran kann der als Unterkiefermessbogen ausgebildete erste Zwischenadapter vom paraokklusalen Registrierbehelf entfernt und stattdessen der zweite Zwischenadapter mittels seiner Verbindungsaufnahme mit dem paraokklusalen Registrierbehelf verbunden werden.

Nun kann wiederum - wie oben im Verfahrenschritt c₁) - an der Kupplungsaufnahme des - in diesem Fall zweiten - Zwischenadapters die Kupplungseinrichtung der okklusalen Bissgabel angeordnet und mittels der okklusalen Bissgabel als Bissträger der Bissschlüssel von der Unterkiefer-Zahnreihe abgenommen und auf der okklusalen Bissgabel codiert werden. Dies bedeutet insbesondere, dass die im Verfahrenschritt c₁) erfolgende Übertragung bzw. Codierung des Bissschlüssels von dem paraokklusalen Registrierbehelf auf die okklusale Bissgabel ohne den dabei möglicherweise störenden Unterkiefermessbogen, jedoch - mittels des zweiten Zwischenadapters - bei unverändert hoher Präzision durchgeführt werden kann.

Gemäß einer besonders bevorzugten Ausführungsform des erfindungsgemäßen Verfahrens erfolgt dabei die Kopplung der Verbindungseinrichtung des paraokklusalen Registrierbehelfs mit der Verbindungsaufnahme des Zwischenadapters mittels Anziehungskraft eines an der Verbindungseinrichtung oder an der Verbindungsaufnahme in einem Magnet-Verbindungsbereich angeordneten Koppelmagneten.

Diese Ausführungsform besitzt insbesondere den Vorteil, dass auf diese Weise ein weitgehend selbsttätiges Einrasten der Verbindungseinrichtung des paraokklusalen Registrierbehelfs und der Verbindungsaufnahme des Zwischenadapters aneinander erfolgen kann. Das Einrasten kann dabei weitestgehend ohne zusätzliche, insbesondere ohne etwa extern abgestützte Krafteinwirkung erfolgen, welche aufgrund der Gefahr einer dadurch induzierten Dejustierung beispielsweise des am paraokklusalen Registrierbehelf angeordneten Kugelgelenks ansonsten eine Fehlerquelle darstellen würde.

Dank der magnetisch initiierten Fixierung heben sich die zum Einrasten von Verbindungseinrichtung und Verbindungsaufnahme erforderlichen Aktions- und Reaktionskräfte somit exakt gegenseitig auf, und es wird eine hohe Präzision der Verbindung zwischen paraokklusalen Registrierbehelf und Zwischenadapter bzw. Unterkiefermessbogen gewährleistet.

Eine Trennung der magnetischen Kopplung zwischen der Verbindungseinrichtung des paraokklusalen Registrierbehelfs und der Verbindungsaufnahme des Zwischenadapters erfolgt dabei vorzugsweise dadurch, dass der Koppelmagnet unter einem Winkel relativ zur Magnet-Hauptkraftrichtung - bevorzugt in senkrechter Richtung zur Magnet-Hauptkraftrichtung - aus dem Verbindungsbereich heraus bewegt wird.

Dies ist besonders vorteilhaft insofern, als der Koppelmagnet auf diese Weise mit einer lediglich minimalen Betätigungskraft langsam und gleichmäßig aus dem Verbindungsbereich zwischen Verbindungseinrichtung und Verbindungsaufnahme herausbewegt werden kann. Somit kann auf diese Weise die Magnetverbindung - wiederum mit geringster externer Krafteinwirkung - sorgfältig und dennoch einfach gelöst werden, ohne dass aufgrund des Trennvorgangs zwischen paraokklusalen Registrierbehelf und Zwischenadapter fehlerinduzierende Reaktionskräfte auftreten und die Genauigkeit der Positionierung des paraokklusalen Registrierbehelfs relativ zum Unterkiefer-Zahnbogen beeinträchtigen könnten.

Nach einer weiteren bevorzugten Ausführungsform des erfindungsgemäßen Verfahrens ist vorgesehen, dass der Bissträger einen Datenspeicher zur Speicherung von Registrierdaten umfasst, oder am Bissträger eine Datenspeichereinrichtung zur Speicherung von Registrierdaten angeordnet werden kann. Dies ermöglicht, dass nach der Durchführung der Kiefergelenksregistrierung bzw. Scharnierachsenbestimmung am Patienten einige oder alle Registrierdaten in dem Datenspeicher des Bissträgers abgelegt werden können. Anschließend ist einzig und allein noch der Bissträger mit den darauf angeordneten Zahnimpressionen als Bissschlüssel sowie mit den in der Datenspeichereinrichtung enthaltenen Daten insbesondere zur Patienten-Scharnierachsenlage beispielsweise an das Zahntechnikerlabor weiterzugeben.

Auf diese Weise können zudem nicht nur die Daten zur Patienten-Scharnierachsenlage, sondern vielmehr insbesondere sämtliche Daten bezüglich der vollständigen Kiefergeometrie des Patienten auf dem Datenspeicher des Bissträgers abgelegt werden. Der Bissträger mit der bzw. den Zahnbogenimpressionen kann somit für sich genommen und ohne jegliche weitere Hilfsmittel oder Unterlagen eine in sich geschlossene perfekte Dokumentation der vollständigen Patientengeometrie bzw. sämtlicher relevanter gnathologischer Zusammenhänge des Patienten bilden. Dies ist nicht nur von unschätzbarem Vorteil für den Transfer von Kiefergeometrien beispielsweise das zahntechnische Labor, sondern eröffnet darüber hinaus beispielsweise, jedoch keineswegs ausschließlich, auch in der Forensik entscheidende neue Einsatzfelder und Vereinfachungen.

Somit ist der Zahntechniker lediglich anhand des erhaltenen Bissträgers mit der darin angeordneten Datenspeichereinrichtung in der Lage, Kiefermodelle des Patienten im Montagestand bzw. im Artikulator positions- und lagegerecht anzuordnen und einzugipsen. Damit lassen sich der Transfer und die Weitergabe der Daten zur Geometrie des Patienten-Kiefergelenks, einschließlich der exakten Scharnierachsenlage, beispielsweise an das Zahntechnikerlabor, gegenüber dem Stand der Technik nahezu revolutionär vereinfachen und beschleunigen, wobei gleichzeitig die im Stand der Technik vorhandenen Fehlerquellen reduziert oder eliminiert und zudem erhebliche Kosten eingespart werden können.

Mit diesem Hintergrund ist es sogar möglich, einen sich selbsttätig vollautomatisch auf die exakte Kiefergelenksgeometrie eines Patienten einstellenden Montagestand bzw. Artikulator darzustellen. Ein solcher Montagestand bzw. Artikulator benötigt neben der Kupplungsaufnahme für den Bissträger und neben der beispielsweise servomotorischen Verstellung der Relativposition zwischen Kupplungsaufnahme und Scharnierachse zusätzlich lediglich noch eine Schnittstelle, über die die in der Datenspeichereinrichtung des Bissträgers enthaltenen Daten zur Kiefergelenksgeometrie und Patienten-Scharnierachsenlage ausgelesen und in entsprechende Steuerbefehle für die Servomotoren des Artikulators bzw. Montagestands umgesetzt werden können.

Im zahntechnischen Labor ist in diesem Fall somit lediglich die erhaltene Bissgabel mit den darin gespeicherten Geometriedaten des Patienten in die Kupplungsaufnahme des Montagestands oder Artikulators zu stecken, wonach der Montagestand bzw. Artikulator am Labortisch vollautomatisch und exakt die Kiefergelenksgeometrie des Patienten annimmt und reproduziert.

Gemäß einer weiteren, besonders bevorzugten Ausführungsform des erfindungsgemäßen Verfahrens wird im Verfahrenschritt c) die räumliche Position der Scharnierachse des Patienten sowohl in einer habituellen Interkuspidationsposition als auch in einer von der habituellen unterschiedlichen therapeutischen Relativstellung zwischen Oberkiefer und Unterkiefer ermittelt. Die therapeutische Relativstellung kann dabei beispielsweise anhand elektronischer Aufzeichnung und Beurteilung vorzugsweise des gesamten Bewegungsraums des Kiefergelenks des Patienten festgelegt werden.

Das Verfahren gemäß dieser Ausführungsform umfasst zunächst einmal den zusätzlichen Verfahrenschritt g), in welchem - beispielsweise mittels Zentrikregistrat - die Positionierung eines Oberkiefermodells des Patienten relativ zum Unterkiefermodell im Montagestand sowie die Fixierung - beispielsweise durch Angipsen - des Oberkiefermodells an einer Oberkiefer-Montageplatte des Montagestands erfolgen. Damit ist zunächst einmal die räumliche Lage beider Kiefer des Patienten, wie auch die zugehörige Scharnierachsenlage, in der gewählten habituellen Position exakt im Montagestand bzw. Artikulator reproduziert.

Anschließend erfolgt in einem weiteren Verfahrenschritt h) eine Relativverschiebung der Oberkiefer-Montageplatte zusammen mit dem Oberkiefermodell gegenüber der Unterkiefer-Montageplatte zusammen mit dem Unterkiefermodell bis zum Erreichen der angestrebten therapeutischen Relativstellung zwischen den Zahnreihen des Oberkiefers und des Unterkiefers.

Diese Ausführungsform des erfindungsgemäßen Verfahrens umfasst mit anderen Worten zunächst einmal, dass die Kiefermodelle des Patienten im Montagestand bzw. Artikulator in einer am Patienten ermittelten habituellen Position befestigt, beispielsweise eingegipst, werden. Anschließend erfolgt die Einstellung bzw. das Anfahren der zuvor ermittelten bzw. festgelegten therapeutischen Relativposition zwischen Oberkiefer und Unterkiefer. Letzteres kann entweder unter Computer- oder visueller Monitorkontrolle erfolgen, wozu eine entsprechende Sensorik, beispielsweise Kameras und Marker, am Montagestand bzw. Artikulator angeordnet werden.

Die Einstellung der therapeutischen Position im Montagestand bzw. Artikulator kann aber auch - wie dies gemäß einer weiteren Ausführungsform des erfindungsgemäßen Verfahrens vorgesehen ist - durch direktes Anfahren der zuvor am Patienten festgelegten therapeutischen Relativstellung beispielsweise mittels eines servomotorisch verstellbaren Artikulators oder Montagestands, erfolgen. In diesem Fall ist es nicht notwendig, dass am Montagestand bzw. Artikulator eigens nochmals eine Registriereinrichtung zum Zweck der visuellen Kontrolle beim Anfahren der therapeutischen Relativstellung angeordnet werden muss.

Dank dieser Ausführungsformen des erfindungsgemäßen Verfahrens können die in vielen Fällen wichtigen therapeutischen Relativstellungen von Oberkiefer und Unterkiefer somit auch in einem Montagestand bzw. Artikulator exakt und reproduzierbar erzeugt werden. Dadurch wird ermöglicht, dass beispielsweise therapeutische Registrate, therapeutische Aufbissbehelfe und dergleichen mit höchster und gleichzeitig reproduzierbarer Genauigkeit bereits im Labor fertig gestellt werden können. Dadurch kann der Umfang der im Mund des Patienten selbst noch durchzuführenden Arbeiten auf ein absolutes Minimum reduziert oder sogar eliminiert werden, was die Akzeptanz durch den Patienten erheblich steigern und gleichzeitig zu nachhaltiger Kostenreduktion führen kann.

Eine weitere Ausführungsform des erfindungsgemäßen Verfahrens sieht vor, dass der Artikulator-Montagestand ein im Wesentlichen herkömmlicher Artikulator ist bzw. dessen Oberteil darstellt. Dies bedeutet mit anderen Worten, dass der Montagestand, in welchem die Positionierung des Unterkiefermodells des Patienten relativ zur Scharnierachse des Montagestands anhand der Daten zur Patienten-Scharnierachsenlage relativ zur Kupplungseinrichtung des Bissträgers erfolgt, im Wesentlichen identisch mit einem Artikulator ist bzw. gleichzeitig das Oberteil des Artikulators darstellt. Auf diese Weise kann ein ansonsten notwendiger Austausch des Montagestand-Oberteils gegen ein eigenes Artikulator-Oberteil und ggf. die separate Montage von Artikulator-Gelenkboxen nach der Modell- und Geometrieübertragung in den Montagestand entfallen.

Diese Ausführungsform des erfindungsgemäßen Verfahrens lässt sich im einfachsten Fall beispielsweise dadurch verwirklichen, dass ein ansonsten im Wesentlichen herkömmlicher Artikulator mit einer Kupplungsaufnahme für die Aufnahme der Kupplungseinrichtung eines Bissschlüssels ausgestattet wird, wobei an dem Artikulator zusätzlich Mittel zur Verstellung, Justierung und Fixierung der räumlichen Relativposition der Artikulator-Scharnierachse relativ zur Artikulator-Kupplungsaufnahme vorgesehen werden.

Somit kann der Bissträger einfach direkt an der Kupplungsaufnahme des Artikulators befestigt werden, und es kann die Artikulator-Scharnierachse - zuvor bzw. im Anschluss daran - relativ zur Artikulator-Kupplungseinrichtung in die gleiche räumliche Relativposition zur Artikulator-Scharnierachse gebracht werden, wie sie der zuvor am Patienten ermittelten Relativposition zwischen Bissträger-Kupplungseinrichtung und Patienten-Scharnierachse entspricht.

Die Erfindung betrifft ferner ein Registriersystem zum scharnierachsenbezogenen Kiefermodell- und Kiefergeometrietransfer eines Patienten in einen Artikulator-Montagestand bzw. Artikulator. Dabei umfasst das Registriersystem in für sich genommen zunächst einmal bekannter Weise einen Kieferadapter mit einem Bissträger und einem auf dem Bissträger in Form einer Impression einer Zahnreihe des Patienten anordenbaren Bissschlüssel. Dabei weist der Bissträger des Kieferadapters eine Kupplungseinrichtung auf, die räumlich definiert formschlüssig mit einer am Montagestand in reproduzierbarer Relativposition zur Montagestands-Scharnierachse anordenbaren Kupplungsaufnahme verbindbar ist, wobei die Montagestand-Kupplungsaufnahme formkomplementär zur Kupplungseinrichtung des Bissträgers ausgebildet ist.

Erfindungsgemäß zeichnet sich das Registriersystem jedoch dadurch aus, dass der Kieferadapter ein Unterkieferadapter und der Bissträger ein Unterkiefer-Bissträger ist. Dabei ist der Unterkieferadapter mit einem Messträger zur Bestimmung der Patienten-Scharnierachse relativ zur Kupplungseinrichtung des Bissträgers verbindbar, und es ist die räumliche Position der Kupplungsaufnahme des Montagestands relativ zur Scharnierachse des Montagestands definiert und reproduzierbar verstellbar.

Anhand des erfindungsgemäßen Registriersystems kann zunächst einmal eine genaue Lokalisierung der Scharnierachse des Patienten relativ zum Unterkiefer bzw. relativ zur Kupplungseinrichtung des an der Unterkiefer-Zahnreihe angeordneten Bissträgers erfolgen. Dabei erfolgt die Bestimmung der Patienten-Scharnierachsenlage mittels des hierzu mit dem Unterkieferadapter verbundenen Messträgers anhand der bekannten Abmessungen und Geometrie des Messträgers sowie dessen Verbindung mit dem Unterkieferadapter.

Nach der mittels des erfindungsgemäßen Registriersystems durchgeführten Scharnierachsenbestimmung ist somit zunächst einmal die exakte räumliche Relativbeziehung zwischen der Patienten-Scharnierachse, der Unterkiefer-Zahnimpression auf dem Bissträger und der Geometrie des Bissträgers - insbesondere der Kupplungseinrichtung des Bissträgers - bekannt. Diese räumliche Relativbeziehung kann sodann dank der relativ zur Scharnierachse des Montagestands bzw. Artikulators justierbaren räumlichen Position der Kupplungsaufnahme des Montagestands einfach dadurch mit höchster Genauigkeit und unter Reduzierung oder Eliminierung von Fehlerquellen in den Montagestand bzw. Artikulator übertragen werden, dass der Bissträger mittels seiner Kupplungseinrichtung an der Kupplungsaufnahme des Montagestands angeordnet wird und dass die Kupplungsaufnahme des Montagestands entsprechend der am Patienten festgestellten Scharnierachsenlage relativ zur Montagestand-Scharnierachse einjustiert wird.

Vorzugsweise weist dabei der Messträger eine zur Kupplungseinrichtung des Unterkieferadapters formkomplementäre Kupplungsaufnahme auf. Auf diese Weise ergibt sich eine einfache und schnelle modulare Verbindungsmöglichkeit zwischen Unterkieferadapter und Messträger. Beispielsweise können verschiedene Messträger je nach Genauigkeitsanforderung verwendet werden, oder es lassen sich wahlweise elektronischberührungslose oder mechanische Messträger sowie die zugehörigen Messverfahren in Verbindung mit dem Registriersystem einsetzen.

Gemäß einer bevorzugten Ausführungsform der Erfindung ist der Unterkiefer-Bissträger als okklusaler Löffel ausgebildet, wobei der okklusale Löffel eine okklusale Bissgabel zur Aufnahme der Zahnimpressionen bzw. des Bissschlüssels des Patienten sowie eine lösbar mit der Bissgabel verbindbare Manschette umfasst.

Dies ermöglicht eine Erzeugung des Bissschlüssels und ggf. Durchführung einer Kiefergelenksregistrierung, dergestalt, dass Bissgabel und Manschette zunächst einmal miteinander verbunden, z.B. zusammengesteckt, sind. Hierdurch wird bei der Erzeugung des Bissschlüssels das seitliche Abfließen der noch pastösen Impressionsmasse wirkungsvoll verhindert. Nach dem Aushärten der Impressionsmasse jedoch kann die Manschette von der Bissgabel getrennt werden. Auf diese Weise kann der nunmehr auf der Bissgabel in Form der ausgehärteten Impressionsmasse angeordnete Bissschlüssel leicht und frei zugänglich von allen Seiten bearbeitet oder beschnitten werden.

Gemäß einer alternativen Ausführungsform der Erfindung ist der Unterkiefer-Bissträger als paraokklusaler Registrierbehelf ausgebildet, wobei die Kupplungseinrichtung des Bissträgers mittels einer vorzugsweise als Kugelgelenk ausgebildeten Gelenkeinrichtung mit den Zahnkontaktflächen des Bissträgers verbunden ist.

Diese Ausführungsform hat den Hintergrund, dass mittels des erfindungsgemäßen Registriersystems die Relativbeziehung zwischen der Patienten-Scharnierachse und der Kupplungseinrichtung des Unterkieferadapters ermittelt und auf den Montagestand überträgen werden soll. Hierzu ist es vorteilhaft, wenn sich die Kupplungseinrichtung des Unterkieferadapters relativ zu den Zahnkontaktflächen des Unterkieferadapters bereits am Patienten so in die Nähe der Standardposition der Kupplungseinrichtung betreffend die Scharnierachsen-Nulllage des Montagestands bringen lässt, dass später am Montagestand nur noch geringfügige Verstellungen vorgenommen werden müssen, um die Montagestand-Scharnierachse mit der Patienten-Scharnierachse zur Deckung zu bringen.

Ferner kann auf diese Weise eine einfache Anpassung des Unterkieferadapters an unterschiedliche Kiefer- und Schädelgeometrien verschiedener Patienten erfolgen. Dies ist insbesondere dann von Bedeutung, wenn ein standardisierter Unterkiefermessbogen und/oder ein paraokklusaler Registrierbehelf zur Patienten-Scharnierachsenbestimmung verwendet wird, da in diesem Fall ansonsten - also ohne justierbare Kupplungseinrichtung - kaum Möglichkeiten zur Variation der Stellung des Unterkiefermessbogens relativ zum Zahnbogen des Unterkiefers bzw. relativ zum Unterkiefer des Patienten und damit zur ungefähren Einregulierung des Unterkiefermessbogens vor der Messung bestehen würden.

Gemäß einer besonders bevorzugten Ausführungsform der Erfindung ist der Messträger als Unterkiefermessbogen mit Markerelementen zur berührungslosen Positionsbestimmung ausgebildet, wobei die Markerelemente zudem kiefergelenksnah angeordnet sind.

Auf diese Weise ermöglicht das Registriersystem einerseits mittels mehrerer, beispielsweise jeweils beidseitig des Kiefergelenks am Unterkiefermessbogen unter verhältnismäßig großen Abstand angeordneter Marker - die damit eine hochgenaue Messbasis bilden - eine exakte Patienten-Scharnierachsenbestimmung. Andererseits können bei einer solchen kiefergelenksnahen Anordnung der Messbogenmarker etwaige zusätzliche Referenzmarker zur Ermittlung der Referenzebene und/oder zur Erfassung und messtechnischen Eliminierung von Schädelbewegungen des Patienten ebenfalls kiefergelenksnah am Schädel des Patienten angeordnet werden, und es kann somit eine Erfassung sowohl der Messbogenmarker als auch der Referenzmarker beispielsweise mit jeweils ein und derselben Messeinrichtung erfolgen.

Dies bedeutet mit anderen Worten, dass gemäß dieser Ausführungsform der Erfindung eine vollständige räumliche Erfassung der Position und Lage des Messbogens (und damit auch der Patienten-Scharnierachse), darüber hinaus die gleichzeitige Erfassung der schädelbezogenen Referenzebene und des Patienten-Referenzwinkels wie auch zudem die messtechnische Eliminierung von Schädelbewegungen des Patienten, lediglich bereits anhand zweier in der Region der beiden Kiefergelenke angeordneter Messsysteme, beispielsweise Bildaufnahmekameras, erfolgen kann.

Eine besonders bevorzugte Ausführungsform der Erfindung sieht vor, dass der Montagestand elektromechanische Aktuatoren, beispielsweise Servomotoren, zur Verstellung der am Montagestand angeordneten Kupplungsaufnahme relativ zur Verbindungsgeraden der Montagestand-Gelenkpunkte aufweist. Auf diese Weise kann, beispielsweise mittels entsprechender Verschiebung der Kupplungsaufnahme oder aber der Gelenkpfannen des Montagestands, relativ zu einer Montageplatte des Montagestands, die am Patienten ermittelte Scharnierachsenlage weitestgehend mechanisiert bzw. automatisiert am Montagestand oder Artikulator genau reproduziert werden.

Gemäß einer weiteren, gegenüber der beispielsweise servomotorischen Mechanisierung des Montagestands alternativen Ausführungsform des erfindungsgemäßen Registriersystems ist vorgesehen, dass die Montagestand-Kupplungsaufnahme - die zur Aufnahme der Kupplungseinrichtung des Bissträgers dient - durch eine Kupplungsaufnahme eines am Montagestand in definierter räumlicher Relativstellung zur Scharnierachse des Montagestands anordenbaren Unterkiefertransferbogens gebildet ist. Dabei umfasst der Unterkiefertransferbogen zwei Achsmarkierelemente, beispielsweise Achsmarkierspitzen, zum Zweck der räumlich definierten Anordnung des Unterkiefertransferbogens am Montagestand.

Ferner weist der Unterkiefertransferbogen eine gleichzeitig die Montagestand-Kupplungsaufnahme bildende Kupplungsaufnahme für die Kupplungseinrichtung des Bissträgers auf, wobei die räumliche Relativposition zwischen der Verbindungsgeraden der Achsmarkierelemente und der Kupplungseinrichtung des Unterkiefertransferbogens am Unterkiefertransferbogen verstellbar, in Übereinstimmung mit der am Patienten ermittelten Scharnierachsenlage bringbar und am Unterkiefertransferbogen fixierbar ist.

Dabei erfolgt gemäß dieser Ausführungsform die Anordnung von Bissträger und Unterkiefermodell im Montagestand sowie die Einjustierung der räumlichen Relativposition der Montagestand-Kupplungsaufnahme relativ zur Montagestand-Scharnierachse rein mechanisch mit Hilfe des Unterkiefertransferbogens, dergestalt, dass die Achsmarkierelemente des Unterkiefertransferbogens mit auf der Scharnierachse des Montagestands angeordneten Achsaufnahmepunkten des Montagestands verbunden werden bzw. mit diesen Achsaufnahmepunkten zur Deckung gebracht werden.

Dies bedeutet mit anderen Worten, dass gemäß dieser Ausführungsform des erfindungsgemäßen Verfahrens die räumliche Relativbeziehung zwischen der Patienten-Scharnierachse und der Kupplungseinrichtung des Bissträgers mechanisch in Form der am Unterkiefertransferbogen eingestellten und fixierten Relativposition zwischen den Achsmarkierspitzen des Unterkiefertransferbogens und der Kupplungseinrichtung des Unterkiefertransferbogens auf dem Unterkiefertransferbogen codiert ist. Diese Codierung des Unterkiefertransferbogens erfolgt dabei vorzugsweise unmittelbar nach der Scharnierachsenbestimmung, zum Beispiel mittels Verschiebung der Markierspitzen des Unterkiefertransferbogens bis zur Deckungsgleichheit der Markierspitzen am Unterkiefertransferbogen mit der ermittelten Patienten-Scharnierachse. Dabei kann gleichzeitig auch eine Übertragung des am Patienten ermittelten patientenspezifischen Referenzwinkels bezüglich einer Schädel-Referenzebene in den Montagestand erfolgen, indem im Bereich der Markierspitzen des Unterkiefertransferbogens ein Winkeleinstellelement vorgesehen ist, mit Hilfe dessen die Referenzwinkelposition des Unterkiefertransferbogens am Montagestand kontrolliert bzw. eingestellt werden kann.

Mit diesem Hintergrund ist gemäß einer weiteren bevorzugten Ausführungsform der Erfindung vorgesehen, dass der Unterkiefermessbogen gleichzeitig den Unterkiefertransferbogen bildet. Somit kann der mechanische Transfer der Patienten-Scharnierachsenlage in den Montagestand bzw. Artikulator ohne Austausch des Unterkieferbogens anhand desselben Unterkieferbogens durchgeführt werden, mit dem auch die Patienten-Scharnierachsenbestimmung selbst durchgeführt wurde.

Gemäß einer weiteren, besonders bevorzugten Ausführungsform der Erfindung ist die am Montagestand zur Ankopplung des Bissträgers angeordnete Kupplungsaufnahme entlang einer kreisbogenförmig ausgebildeten Führungseinrichtung relativ zu einer Montageplatte des Montagestands verstellbar. Dabei fällt der Mittelpunkt des Kreisbogens mit der Montagestand-Scharnierachse in deren Nulllage bzw. in deren Ausgangslage vor einer Übertragung der Kiefergeometrie des Patienten in den Montagestand zusammen.

Diese Ausführungsform der Erfindung ermöglicht die exakte Übertragung auch der Schädel-Referenzebene sowie des patientenspezifischen Referenzwinkels in den Montagestand bzw. Artikulator. Damit kann nach der Geometrieübertragung mittels des Registriersystems insbesondere auch eine Voll-Artikulation einschließlich der auf die Referenzebene bezogenen Kiefergelenksgeometrie, wie beispielsweise Kondylenbahnneigung, Bennettwinkel, Retrusuion/Surtrusion, und/oder Immediate Side Shift, erfolgen.

Eine weitere, bevorzugte Ausführungsform der Erfindung sieht vor, dass der Unterkieferadapter eine okklusale Bissgabel mit Kupplungseinrichtung als Bissträger sowie einen paraokklusalen Registrierbehelf umfasst. Dabei weist der paraokklusale Registrierbehelf zudem einen Zwischenadapter mit einer Kupplungsaufnahme für die Kupplungseinrichtung der okklusalen Bissgabel auf. Mit dieser Ausführungsform wird ermöglicht, dass zur Patienten-Scharnierachsenbestimmung zunächst lediglich der paraokklusale Registrierbehelf verwendet wird, was eine besonders genaue und störungsfreie Bestimmung der Patienten-Scharnierachsenlage ohne Interferenzen bezüglich der Okklusion des Patienten ermöglicht. Im Anschluss an die mit dem paraokklusalen Registrierbehelf durchgeführte Patienten-Scharnierachsenbestimmung lässt sich sodann - mittels des Zwischenadapters - der Bissschlüssel sowie die ermittelte räumliche Information bezüglich der Patienten-Scharnierachsenlage relativ zum paraokklusalen Registrierbehelf auf die okklusale Bissgabel übertragen. Gleichzeitig wird auch auf der okklusalen Bissgabel eine Impression der Zahnreihe des Unterkiefers erstellt.

Mit anderen Worten bedeutet dies, dass bei dieser Ausführungsform die im Rahmen der Patienten-Scharnierachsenbestimmung ermittelte räumliche Relativposition zwischen der Patienten-Scharnierachse und dem paraokklusalen Registrierbehelf - mittels definiert formschlüssiger Verbindung zwischen dem paraokklusalen Registrierbehelf und der okklusalen Bissgabel mittels des Zwischenadapters - auch der Kupplungseinrichtung der okklusalen Bissgabel zugeordnet wird. Dabei wird die räumliche Relativposition des Unterkiefer-Zahnbogens des Patienten somit zusätzlich auch auf die okklusale Bissgabel codiert.

Demzufolge stellt auch in diesem Fall die okklusale Bissgabel wieder den Bissträger dar, auf dem als Informationsträger anhand der Zahnimpression als Bissschlüssel die während der Scharnierachsenbestimmung vorhandene räumliche Relativposition zwischen Patienten-Scharnierachse und Kupplungsaufnahme des Zwischenadapters genau codiert bzw. gespeichert ist.

Bevorzugt ist dabei der Zwischenadapter des paraokklusalen Registrierbehelfs relativ zu den Zahnkontaktflächen des paraokklusalen Registrierbehelfs vorzugsweise mittels Kugelgelenk justierbar an dem paraokklusalen Registrierbehelf angeordnet.

Auf diese Weise kann mittels entsprechender Justierung des Kugelgelenks eine einfache Anpassung des paraokklusalen Registrierbehelfs an unterschiedliche Kiefer- und Schädelgeometrien verschiedener Patienten erfolgen. Dies ist insbesondere dann von Bedeutung, wenn ein standardisierter Unterkiefermessbogen zur Patienten-Scharnierachsenbestimmung herangezogen wird, da ohne justierbare Kupplungseinrichtung ansonsten kaum Möglichkeiten zur Variation der Stellung des Unterkiefermessbogens relativ zum Zahnbogen des Unterkiefers bzw. relativ zum Unterkiefer des Patienten, und damit zur ungefähren Einregulierung des Unterkiefermessbogens im Vorfeld der Messung bestehen würden.

Vorzugsweise ist dabei der Zwischenadapter von dem paraokklusalen Registrierbehelf trennbar, wobei der Zwischenadapter eine Verbindungsaufnahme und der paraokklusale Registrierbehelf eine zu der Verbindungsaufnahme formkomplementäre Verbindungseinrichtung aufweist. Besonders bevorzugt weist das Registriersystem zudem zumindest zwei Zwischenadapter auf, die gegeneinander austauschbar sind. Dabei bildet der erste Zwischenadapter gleichzeitig den Messträger, beispielsweise den Unterkiefermessbogen zur vorzugsweise berührungslosen Scharnierachsenbestimmung bzw. ist mit diesem verbunden.

Ein zweiter Zwischenadapter hingegen stellt im Wesentlichen lediglich eine Kupplungsaufnahme für die okklusale Bissgabel sowie eine Verbindungsaufnahme für den paraokklusalen Registrierbehelf bereit.

Diese Ausführungsform bringt es mit anderen Worten mit sich, dass die Patienten-Scharnierachsenbestimmung zunächst einmal mittels des paraokklusalen Registrierbehelfs erfolgen kann, dergestalt, dass der paraokklusale Registrierbehelf an der Verbindungsaufnahme des beispielsweise als Unterkiefermessbogen ausgebildeten ersten Zwischenadapters angeordnet wird. Anschließend kann der als Unterkiefermessbogen ausgebildete erste Zwischenadapter vom paraokklusalen Registrierbehelf entfernt und stattdessen der zweite Zwischenadapter mittels seiner Verbindungsaufnahme mit dem paraokklusalen Registrierbehelf verbunden werden.

Gleichzeitig kann wiederum an der Kupplungsaufnahme des zweiten Zwischenadapters die Kupplungseinrichtung der okklusalen Bissgabel angeordnet und mittels der okklusalen Bissgabel als Bissträger der Bissschlüssel von der Unterkiefer-Zahnreihe abgenommen und auf der okklusalen Bissgabel codiert werden.

Dies bedeutet insbesondere, dass die Übertragung bzw. Codierung des Bissschlüssels vom paraokklusalen Registrierbehelf auf die okklusale Bissgabel ohne den dabei möglicherweise störenden Unterkiefermessbogen, jedoch - mittels des zweiten, zum ersten formkorrespondierenden Zwischenadapters - unter unverändert hoher Präzision durchgeführt werden kann.

Gemäß einer besonders bevorzugten Ausführungsform des erfindungsgemäßen Registriersystems umfasst dabei die Verbindungseinrichtung des paraokklusalen Registrierbehelfs oder die Verbindungsaufnahme des Zwischenadapters einen in einem Magnet-Verbindungsbereich angeordneten Koppelmagneten zur Kopplung der Verbindungseinrichtung mit der Verbindungsaufnahme.

Diese Ausführungsform bringt den Vorteil mit sich, dass auf diese Weise ein weitgehend selbsttätiges Einrasten der Verbindungseinrichtung des paraokklusalen Registrierbehelfs und der Verbindungsaufnahme des Zwischenadapters erfolgen kann. Das Einrasten kann dabei praktisch ohne zusätzliche, insbesondere ohne extern abgestützte, Krafteinwirkung erfolgen, da letztere aufgrund der Gefahr der dadurch induzierten Dejustierung insbesondere des am paraokklusalen Registrierbehelf angeordneten Kugelgelenks eine Fehlerquelle darstellen würde.

Denn dank der magnetisch initiierten Fixierung heben sich die zum Einrasten von Verbindungseinrichtung und Verbindungsaufnahme erforderlichen Aktions- und Reaktionskräfte exakt gegenseitig auf, und es wird somit eine hohe Präzision der Verbindung zwischen paraokklusalen Registrierbehelf und Zwischenadapter bzw. Unterkiefermessbogen gewährleistet.

Zum Zweck der Trennung der magnetischen Kopplung zwischen der Verbindungseinrichtung des paraokklusalen Registrierbehelfs und der Verbindungsaufnahme des Zwischenadapters ist es gemäß einer weiteren bevorzugten Ausführungsform des erfindungsgemäßen Registriersystems vorgesehen, dass der Koppelmagnet unter einem Winkel relativ zur Magnet-Hauptkraftrichtung, vorzugsweise in senkrechter Richtung zur Magnet-Hauptkraftrichtung, aus dem Verbindungsbereich heraus bewegbar ist.

Dies ist besonders vorteilhaft insofern, als der Koppelmagnet auf diese Weise mit einer minimalen Betätigungskraft aus dem Verbindungsbereich zwischen Verbindungseinrichtung und Verbindungsaufnahme herausbewegt werden kann. Somit kann auf diese Weise die Magnetverbindung - wiederum mit geringster externer Krafteinwirkung - einfach gelöst werden, ohne dass aufgrund des Trennvorgangs zwischen paraokklusalem Registrierbehelf und Zwischenadapter fehlerinduzierende Reaktionskräfte auftreten und die Genauigkeit der Positionierung des paraokklusalen Registrierbehelfs relativ zum Unterkiefer-Zahnbogen beeinträchtigen könnten.

Nach einer weiteren bevorzugten Ausführungsform des erfindungsgemäßen Registriersystems ist vorgesehen, dass der Bissträger einen Datenspeicher zur Speicherung von Registrierdaten umfasst, oder am Bissträger eine Datenspeichereinrichtung zur Speicherung von Registrierdaten angeordnet werden kann. Dies ermöglicht, dass nach der Durchführung der Kiefergelenksregistrierung bzw. Scharnierachsenbestimmung am Patienten einige oder alle Registrierdaten in dem Datenspeicher des Bissträgers abgelegt werden können. Anschließend ist einzig und allein noch der Bissträger mit den darauf angeordneten Zahnimpressionen als Bissschlüssel sowie mit den in der Datenspeichereinrichtung enthaltenen Daten insbesondere zur Patienten-Scharnierachsenlage beispielsweise an das Zahntechnikerlabor weiterzugeben.

Somit ist der Zahntechniker lediglich anhand des Gehalts des Bissträgers mit der darin angeordneten Datenspeichereinrichtung in der Lage, Kiefermodelle des Patienten im Montagestand bzw. im Artikulator positions- und lagegerecht anzuordnen. Damit lassen sich der Transfer und die Weitergabe der Daten zur Geometrie des Patienten-Kiefergelenks beispielsweise an den Zahntechniker gegenüber dem Stand der Technik in nahezu umwälzender Weise vereinfachen und beschleunigen. Gleichzeitig werden die im Stand der Technik vorhandenen Fehlerquellen reduziert oder eliminiert, und zudem können Kosten in erheblichem Umfang eingespart werden.

Auf diese Weise können zudem nicht nur die Daten zur Patienten-Scharnierachsenlage, sondern vielmehr beispielsweise sämtliche Daten bezüglich der Kiefergeometrie des Patienten auf dem Datenspeicher des Bissträgers abgelegt werden. Der Bissträger mit der bzw. den darauf angeordneten Zahnbogenimpressionen bildet somit ohne jegliche weitere Hilfsmittel oder Unterlagen eine in sich geschlossene perfekte Dokumentation der vollständigen Kiefergeometrie des Patienten bzw. sämtlicher bezüglich der Kiefergeometrie relevanter Daten. Dies ist nicht nur von entscheidendem Vorteil für den Transfer der Kiefergeometrie beispielsweise in das zahntechnische Labor, sondern eröffnet darüber hinaus auch in anderen Gebieten, wie beispielsweise, jedoch keineswegs ausschließlich, in der Forensik, entscheidende neue Einsatzfelder und Erleichterungen.

Gemäß einer weiteren Ausführungsform des erfindungsgemäßen Registriersystems ist der Artikulator-Montagestand ein modifizierter, ansonsten aber im Wesentlichen herkömmlicher Artikulator bzw. dessen Oberteil. Dies bedeutet mit anderen Worten, dass der Montagestand, in welchem die Positionierung des Unterkiefermodells des Patienten relativ zur Scharnierachse des Montagestands anhand der Daten zur PatientenScharnierachsenlage relativ zur Kupplungseinrichtung des Bissträgers erfolgt, im Wesentlichen identisch mit einem Artikulator ist, bzw. dass der Montagestand gleichzeitig das Oberteil dieses Artikulators darstellt. Auf diese Weise kann der ansonsten notwendige Austausch des Montagestand-Oberteils gegen ein separates Artikulator-Oberteil und ggf. auch die zusätzliche Montage von Artikulator-Gelenkboxen nach der Modell- und Geometrieübertragung in den Montagestand entfallen.

Diese Ausführungsform des erfindungsgemäßen Registriersystems wird im einfachsten Fall beispielsweise dadurch verwirklicht, dass ein ansonsten im Wesentlichen herkömmlicher Artikulator mit einer Kupplungsaufnahme für die Aufnahme der Kupplungseinrichtung eines Bissschlüssels versehen wird, wobei an dem Artikulator zusätzlich Mittel zur Verstellung, Justierung und Fixierung der räumlichen Relativposition der Artikulator-Scharnierachse relativ zur Artikulator-Kupplungsaufnahme (oder umgekehrt) vorgesehen werden.

Bei diesen Verstellmitteln kann es sich gemäß weiterer bevorzugter Ausführungsformen der Erfindung um beispielsweise manuell oder auch servomotorisch relativ zu einer Artikulator-Montageplatte verstellbare Artikulatorgelenke bzw. Artikulator-Gelenkpfannen handeln

Somit kann der Bissträger einfach direkt an der Kupplungsaufnahme des Artikulators befestigt werden, und es kann die Artikulator-Scharnierachse zuvor bzw. anschließend relativ zur Artikulator-Kupplungseinrichtung in die gleiche räumliche Relativposition zur Artikulator-Kupplungseinrichtung gebracht werden, wie sie der zuvor am Patienten ermittelten Relativposition zwischen Bissträger-Kupplungseinrichtung und Patienten-Scharnierachse entspricht.

Diese Offenbarung betrifft ferner eine Verbindungseinrichtung zur lösbaren Verbindung eines Kieferadapters mit einem Messträger oder mit einem Zwischenadapter, insbesondere für die Kiefergelenksregistrierung. Bei dem Messträger kann es sich insbesondere um einen Messbogen zur berührungslosen Kieferregistrierung handeln, der Zwischenadapter ist insbesondere zur Verbindung des Kieferadapters mit einem zugehörigen Bissträger vorgesehen.

Des weiteren zeichnet sich die Verbindungseinrichtung dadurch aus, dass sie einen in einem Magnet-Verbindungsbereich der Verbindungseinrichtung angeordneten Koppelmagneten für die Kopplung der Verbindungseinrichtung mit der Verbindungsaufnahme umfasst. Vorzugsweise ist dabei der Koppelmagnet - zur Trennung der Verbindungseinrichtung von der Verbindungsaufnahme - unter einem Winkel relativ zur Magnet-Hauptkraftrichtung, vorzugsweise in senkrechter Richtung zur Magnet-Hauptkraftrichtung, aus dem Verbindungsbereich heraus bewegbar.

Die magnetische Verbindungseinrichtung besitzt insbesondere den Vorteil, dass auf diese Weise ein weitgehend selbsttätiges Einrasten des Kieferadapters an dem Messträger oder an dem Zwischenadapter möglich ist. Dabei kann das Einrasten praktisch ohne zusätzliche, insbesondere ohne externe, Krafteinwirkung erfolger, wodurch Fehlerquellen aufgrund versehentlicher Dejustierung eliminiert werden können.

Die Trennung der magnetischen Kopplung zwischen der Verbindungseinrichtung und der Verbindungsaufnahme, beispielsweise des Zwischenadapters oder Messträgers, durch das Herausbewegen des Koppelmagneten unter einem Winkel relativ zur Magnet-Hauptkraftrichtung,
- vorzugsweise in senkrechter Richtung zur Magnet-Hauptkraftrichtung - aus dem Verbindungsbereich ist besonders vorteilhaft insofern, als der Koppelmagnet auf diese Weise mit einer minimalen Betätigungskraft vorübergehend aus dem Verbindungsbereich entfernt werden kann.

Damit kann die magnetisch initiierte bzw. gehaltene Verbindung
- wiederum mit geringster externer Krafteinwirkung - sehr einfach getrennt werden, ohne dass aufgrund des Trennvorgangs fehlerinduzierende Reaktionskräfte auftreten.

Diese Offenbarung betrifft schließlich einen Bissträger zur Erzeugung eines Bissschlüssels eines Patienten insbesondere zum Einsatz bei Kiefergelenksregistrierung und Modelltransfer. Erfindungsgemäß zeichnet sich der Bissträger dadurch aus, dass er als okklusaler Löffel ausgebildet ist, wobei der okklusale Löffel eine okklusale Bissgabel zur Aufnahme eines Bissschlüssels sowie eine lösbar mit der Bissgabel verbindbare Manschette zur Stützung des Bissschlüssels umfasst.

Dies ermöglicht die Erzeugung eines Bissschlüssels - und ggf. Durchführung einer Kiefergelenksregistrierung - in der Form, dass Bissgabel und Manschette zunächst einmal miteinander verbunden, z.B. zusammengesteckt, sind. Hierdurch wird bei der Erzeugung des Bissschlüssels das seitliche Abfließen der noch pastösen Impressionsmasse verhindert. Nach dem Aushärten der Impressionsmasse kann die Manschette von der Bissgabel getrennt werden. Auf diese Weise kann der nunmehr auf der Bissgabel in Form der ausgehärteten Impressionsmasse angeordnete Bissschlüssel leicht und frei zugänglich von allen Seiten bearbeitet, beispielsweise zugeschnitten, werden.

Im Folgenden wird die Erfindung anhand lediglich Ausführungsbeispiele darstellender Zeichnungen näher erläutert.

Es zeigen:
- **Fig. 1**: Den Unterkieferadapter mit paraokklusalem Registrierbehelf, okklusaler Bissgabel und Messbogen einer Ausführungsform eines erfindungsgemäßen Registriersystems in isometrischer Darstellung;
- **Fig. 2**: in einer **Fig. 1** entsprechenden Darstellung den paraokklusalen Registrierbehelf gemäß **Fig. 1** mit zugehöriger Verbindungseinrichtung;
- **Fig. 3**: in einer **Fig. 1** und **2** entsprechenden Darstellung den Unterkieferadapter und Messbogen einer weiteren Ausführungsform eines erfindungsgemäßen Registriersystems;
- **Fig. 4**: in einer **Fig. 1** bis **3** entsprechenden Darstellung den Unterkieferadapter und Messbogen gemäß **Fig. 3** in einer weiteren Ansicht;
- **Fig. 5**: in perspektivischer Darstellung die Verbindungseinrichtung des Unterkieferadapters gemäß **Fig. 3** und **4** in vergrößerter Ansicht;
- **Fig. 6**: in einer **Fig. 5** entsprechenden Darstellung die Verbindungseinrichtung gemäß **Fig. 5****;**
- **Fig. 7**: in einer **Fig. 5** und **6** entsprechenden Darstellung die Verbindungseinrichtung gemäß **Fig. 5** und **6** in der Draufsicht;
- **Fig. 8**: in schematischer perspektivischer Darstellung den Unterkieferadapter und Messbogen gemäß **Fig. 3** und **4** ohne das Gehäuse der Magnetverbindungseinrichtung;
- **Fig. 9**: in einer **Fig. 8** entsprechenden Darstellung und Ansicht die Magnetverbindungseinrichtung für den Unterkieferadapter gemäß **Fig. 8****;**
- **Fig. 10**: in einer **Fig. 8** und **9** entsprechenden Darstellung und Ansicht den Unterkieferadapter gemäß **Fig. 3** bis **7** ohne das Gehäuse der Magnetverbindungseinrichtung;
- **Fig. 11**: in einer **Fig. 1** entsprechenden, isometrischen Darstellung Messbogen und okklusale Bissgabel gemäß **Fig. 1** mit Bissträgermanschette, bereit zur okklusalen Registrierung;
- **Fig. 12**: in einer **Fig. 1** und **11** entsprechenden Darstellung und Ansicht den Bissträger gemäß **Fig. 1** und **11** sowie dessen Transfer in einen Montagestand;
- **Fig. 13**: in einer **Fig. 1** und **11** entsprechenden Darstellung und Ansicht Messbogen und paraokklusalen Registrierbehelf gemäß **Fig. 1** und **2****,** bereit zur paraokklusalen Registrierung;
- **Fig. 14**: in einer **Fig. 1****,** **11** und **13** entsprechenden Darstellung und Ansicht Messbogen, okklusale Bissgabel und paraokklusalen Registrierbehelf, bei der Übertragung eines Bissschlüssels vom paraokklusalen Registrierbehelf auf die okklusale Bissgabel;
- **Fig. 15**: in einer **Fig. 1****,** **11****,** **13** und **14** entsprechenden Darstellung und Ansicht Zwischenadapter, okklusale Bissgabel und paraokklusalen Registrierbehelf, bei der Übertragung eines Bissschlüssels vom paraokklusalen Registrierbehelf auf die okklusale Bissgabel;
- **Fig. 16**: in einer **Fig. 15** entsprechenden Darstellung und Ansicht den Bissträger gemäß **Fig. 1****,** **11****,** **12****,** **14** und **15****;**
- **Fig. 17**: in isometrischer Darstellung einen Montagestand einer Ausführungsform eines erfindungsgemäßen Registriersystems in der Vorderansicht; und
- **Fig. 18**: in einer **Fig. 17** entsprechenden Darstellung den Montagestand gemäß **Fig. 17** in der Rückansicht.

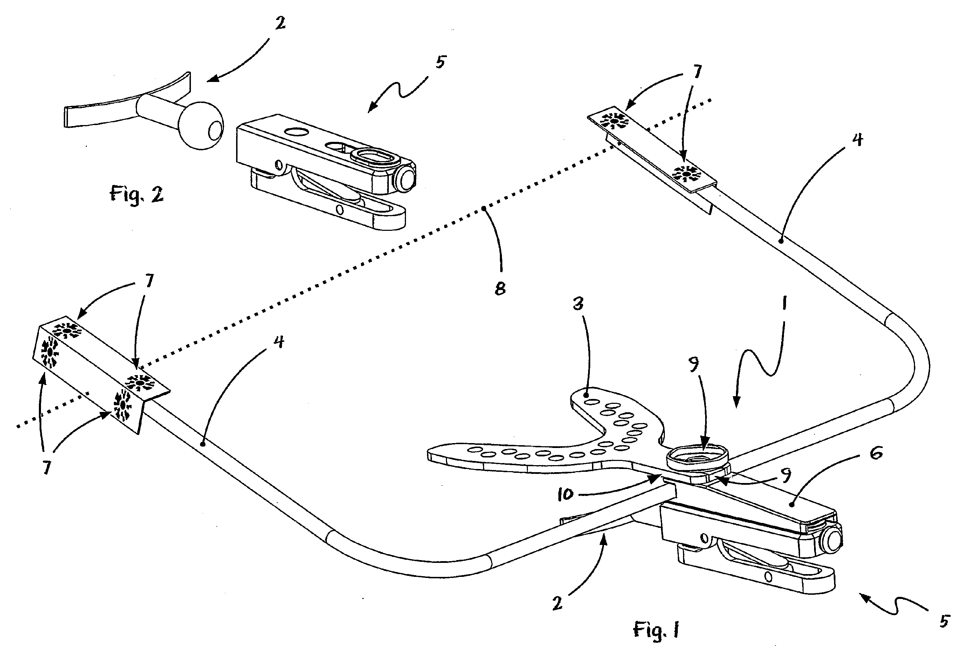

In **Fig. 1** ist ein Unterkieferadapter 1 mit einem paraokklusalen Registrierbehelf 2, einer okklusalen Bissgabel 3 sowie einem Messbogen 4 für eine Ausführungsform eines erfindungsgemäßen Registriersystems in isometrischer Darstellung gezeigt; **Fig. 2** zeigt den paraokklusalen Registrierbehelf 2 gemäß **Fig. 1** mit der zugehörigen Verbindungseinrichtung 5 zur besseren Erkennbarkeit nochmals separat mit zudem getrennt dargestelltem Kugelgelenk.

Dabei dient der paraokklusale Registrierbehelf 2 dazu, den hier Verbindungseinrichtung 5, Zwischenadapter 6 und paraokklusalen Registrierbehelf 2 umfassenden Unterkieferadapter 1 sowie den hier am Unterkieferadapter 1 mittels des Zwischenadapters 6 angeordneten Messbogen 4 mit den Messmarkern 7 zum Zweck der berührungslosen Kiefergelenksregistrierung und Scharnierachsenbestimmung mit dem (nicht dargestellten) Zahnbogen des Unterkiefers eines Patienten zu verbinden.

Somit wird anhand der Verbindung des paraokklusalen Registrierbehelfs 2 mit dem Zahnbogen des Unterkiefers des Patienten eine definierte räumliche Relativbeziehung zwischen dem Zahnbogen des Unterkiefers, der diesem Zahnbogen räumlich zugeordneten Patienten-Scharnierachse 8 des Patienten, dem Unterkieferadapter 1 sowie dem Messbogen 4 mit den Messmarkern 7 hergestellt.

Wird nun anhand beispielsweise berührungsloser Patienten-Scharnierachsenbestimmung mittels optischer Bildverfolgung und digitaler Bildverarbeitung der Abbilder der Messmarker 7 während einer Unterkieferbewegung des Patienten die Lage der Patienten-Scharnierachse 8 relativ zu den Messmarkern 7 ermittelt, so ist damit die räumliche Lage der Patienten-Scharnierachse 8 zunächst einmal relativ zu den Messmarkern 7 und damit auch zum Messbogen 4 bekannt. Der Messbogen 4 besitzt jedoch eine ebenfalls bekannte Geometrie sowie bekannte Abmessungen, wobei der Messbogen 4 räumlich exakt definiert - mittels des Zwischenadapters 6 - zunächst einmal mit dem Unterkieferadapter 1 sowie ferner auch mit einer auf dem Zwischenadapter 6 zeichnungsbezogen oberseitig angeordneten Kupplungsaufnahme 9 verbunden ist.

An der Kupplungsaufnahme 9 wiederum lässt sich die okklusale Bissgabel 3 mittels Ihrer Kupplungseinrichtung 10 ebenfalls räumlich exakt definiert mit dem Unterkieferadapter 1 verbinden.

Dies bedeutet mit anderen Worten, dass im Anschluss an die berührungslose Scharnierachsenbestimmung die räumliche Lage der Patienten-Scharnierachse 8 relativ zu sämtlichen Bestandteilen des Unterkieferadapters 1, und dabei insbesondere auch relativ zur Kupplungsaufnahme 9 am Unterkieferadapter 1, bekannt ist. Im Anschluss an die Scharnierachsenbestimmung kann somit die okklusale Bissgabel 3 mittels ihrer Kupplungseinrichtung 10 mit der Kupplungsaufnahme 9 des über den paraokklusalen Registrierbehelf 2 unverändert noch am Unterkiefer-Zahnbogen des Patienten positionierten Unterkieferadapters 1 verbunden werden, wobei sich gleichzeitig eine Impression der Unterkiefer-Zahnreihe des Patienten in auf der Unterseite der okklusalen Bissgabel 3 aufgebrachter Abdruckmasse (nicht dargestellt) erzeugen lässt.

Im Anschluss hieran ist somit sowohl die räumliche Relativposition der Unterkiefer-Zahnreihe des Patienten (anhand der durch die Abdruckmasse auf der okklusalen Bissgabel 3 gespeicherten Impression des Patienten-Unterkiefers) als auch die räumliche Relativposition der Patienten-Scharnierachse 8 (anhand der geometrisch definierten Kette von den Messmarkern 7 über den Messbogen 4, den Zwischenadapter 6, die Kupplungsaufnahme 9 bis zur Kupplungseinrichtung 10) relativ zur okklusalen Bissgabel 3 bekannt.

Mit anderen Worten bedeutet dies, dass sämtliche zur Reproduktion der Patienten-Scharnierachsenlage relativ zum Unterkiefer-Zahnbogen erforderlichen Informationen nun lediglich bezogen auf die Unterkiefer-Bissgabel 3 codiert sind. Zu jeder beliebigen gegebenen absoluten räumlichen Position der Unterkiefer-Bissgabel, bzw. zu jeder beliebigen gegebenen räumlichen Position der Kupplungseinrichtung 10 der Unterkiefer-Bissgabel 3, kann somit - unter Verwendung der ermittelten Daten zur räumlichen Lage der Patienten-Scharnierachse relativ zur Unterkiefer-Bissgabel 3 bzw. zu deren Kupplungsaufnahme 10 - ohne Weiteres und exakt reproduzierbar die absolute räumliche Position der Scharnierachse 8 angegeben werden.

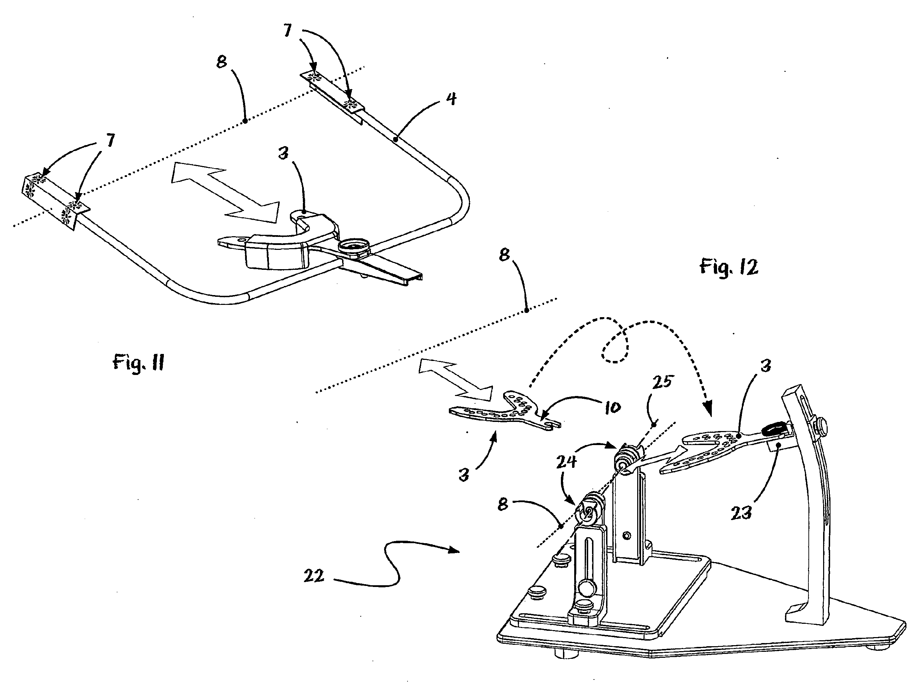

Dieser Zusammenhang gilt insbesondere auch dann, wenn die Unterkiefer-Bissgabel 3 mittels ihrer Kupplungseinrichtung 10 beispielsweise an einer entsprechenden Kupplungsaufnahme eines Artikulators oder Artikulator-Montagestands angeordnet wird, wie er beispielsweise in den **Fig. 12****,** **17** und **18** dargestellt ist. Sobald die Unterkiefer-Bissgabel mit dem darauf in Form der Unterkiefer-Zahnimpressionen angeordneten Bissschlüssel somit im Artikulator oder Montagestand mittels Verbindung ihrer Kupplungseinrichtung 10 mit der Kupplungsaufnahme des Artikulators oder Montagestands verbunden ist, kann somit anhand der gemessenen Daten zur räumlichen Lage der Patienten-Scharnierachse relativ zur Kupplungsaufnahme 10 der Unterkiefer-Bissgabel 3 die exakte räumliche Position der Patienten-Scharnierachse 8 auch im Artikulator oder Montagestand angegeben und im Montagestand dementsprechend reproduziert werden.

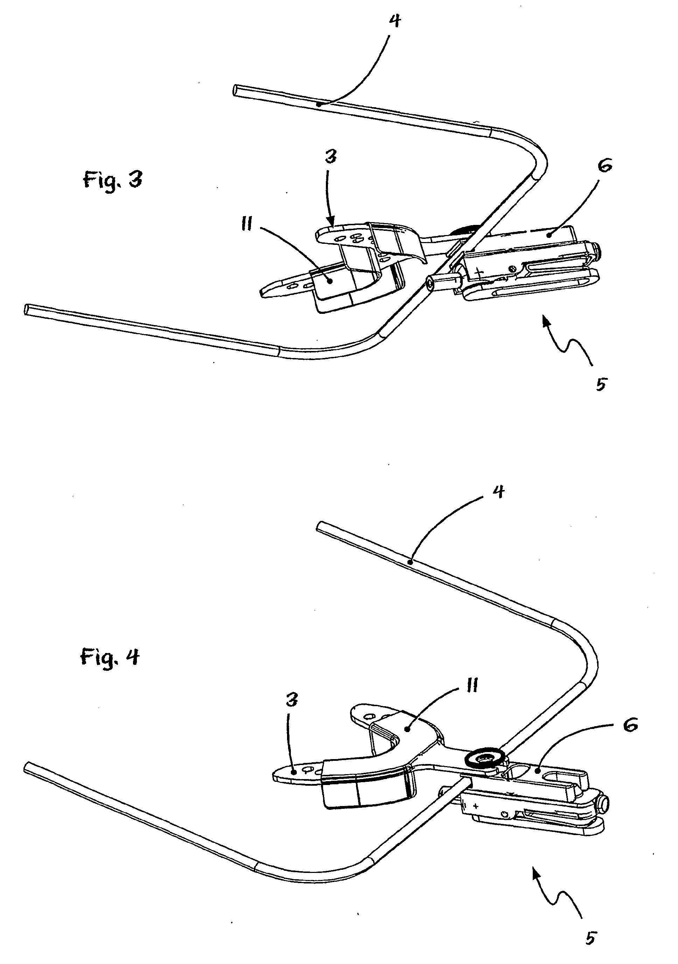

Die **Fig. 3** und **4** zeigen in einer jeweils im Wesentlichen mit der Darstellung der **Fig. 1** und **2** übereinstimmenden, isometrischen Ansicht den Unterkieferadapter und den Messbogen einer weiteren Ausführungsform eines erfindungsgemäßen Registriersystems. Dabei sind in den Darstellungen der **Fig. 3** und **4** der besseren Übersicht halber sowohl die am Messbogen 4 angeordneten Trägerwinkel mit den darauf befindlichen Messmarkern 7 als auch die Zahnkontaktfläche des paraokklusalen Registrierbehelfs 2 gemäß **Fig. 1** weggelassen bzw. nicht abgebildet.

Im Unterschied zu den **Fig. 1** und **2** erkennt man in den **Fig. 3** und **4** zunächst einmal die zusätzlich auf die okklusale Bissgabel 3 aufgesteckte Manschette 11. Die Manschette 11 unterbindet bei der Erzeugung einer Bissimpression der entsprechenden Zahnreihe des Patienten das seitliche Abfließen der noch pastösen Impressionsmasse. Nach dem Aushärten der Impressionsmasse kann die Manschette 11 sodann von der Bissgabel 3 abgezogen werden. Anschließend kann der nunmehr auf der Bissgabel 3 in Form der ausgehärteten Impressionsmasse angeordnete Bissschlüssel frei zugänglich von allen Seiten leicht bearbeitet, beispielsweise beschnitten werden.

Der in den **Fig. 3** und **4** dargestellte Unterkieferadapter 1 unterscheidet sich ferner von dem in **Fig. 1** abgebildeten Unterkieferadapter insbesondere 1 durch die Ausführung des Zwischenadapters 6, der zur Kopplung der okklusalen Bissgabel 3 mit der Verbindungseinrichtung 5 des (hier nicht dargestellten) paraokklusalen Registrierbehelfs 2 sowie mit dem Messbogen 4 dient.

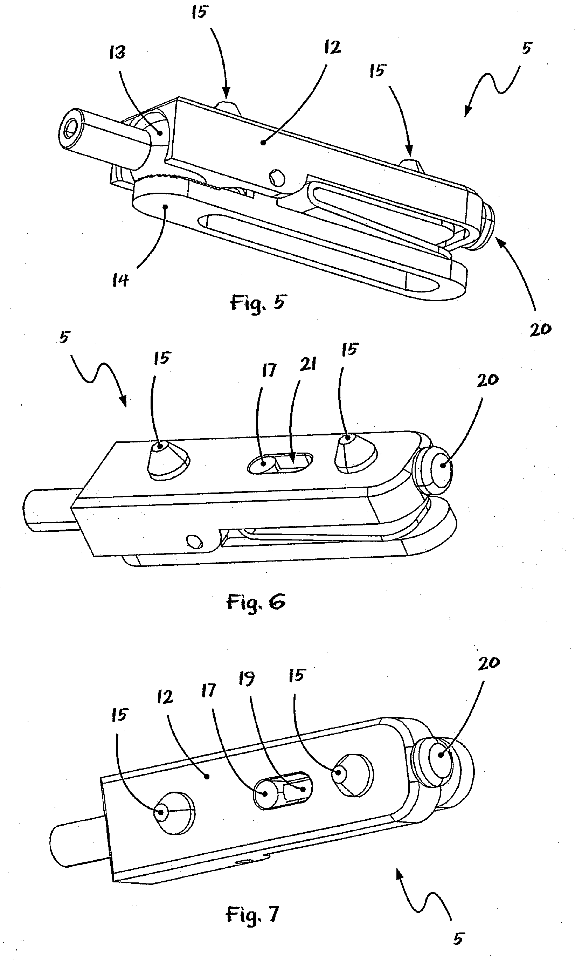

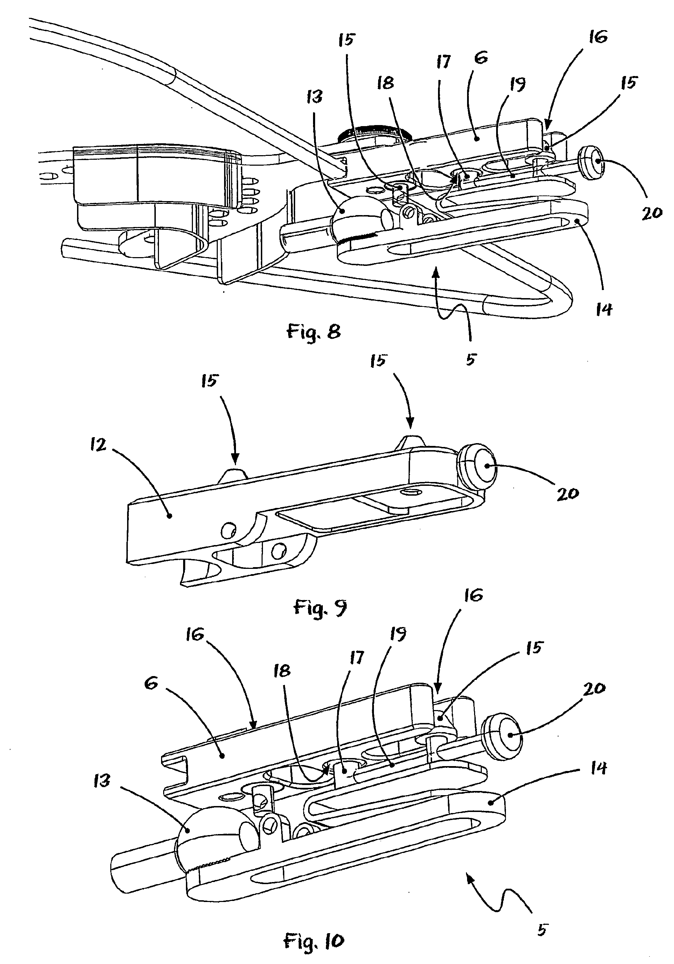

In den **Fig. 5** bis **10** ist die Verbindungseinrichtung 5 - und dabei in den **Fig. 8** und **10** jeweils zusätzlich auch der an die Verbindungseinrichtung 5 gekoppelte Zwischenadapter 6 - gemäß der Ausführungsform des Unterkieferadapters 1 aus **Fig. 3** und **4** jeweils nochmals vergrößert dargestellt, wobei in den **Fig. 8** und **10** der besseren Erkennbarkeit der Funktion der Verbindungseinrichtung 5 halber der Korpus 12 der Verbindungseinrichtung 5 gemäß **Fig. 9** ausgeblendet wurde. Man erkennt insbesondere in den **Fig. 5** bis **7** zunächst einmal die Ausgestaltung der Verbindungseinrichtung 5 zur Verbindung des paraokklusalen Registrierbehelfs mit dem in **Fig. 5** bis **7** nicht dargestellten Zwischenadapter 6 sowie die als Kugelgelenk 13 mit Federklemme 14 ausgeführte Verstellmöglichkeit des paraokklusalen Registrierbehelfs relativ zur Verbindungseinrichtung 5. Das Kugelgelenk 13 dient insbesondere der ungefähren manuellen Einjustierung des Unterkieferadapters 1 mit dem darin angeordneten Messbogen 4 im Vorfeld der Scharnierachsenbestimmung.

Zur räumlich exakt definierten und reproduzierbaren Anlage und Verbindung der Verbindungseinrichtung 5 mit dem Zwischenadapter 6 weist die in den **Fig. 5** bis **10** dargestellte Verbindungseinrichtung 5 ferner zunächst einmal zwei fest mit dem Korpus 12 der Verbindungseinrichtung verbundene Zentrierspitzen 15 auf. Die Zentrierspitzen 15 kommen bei der Zusammenfügung der Verbindungseinrichtung 5 und des Zwischenadapters 6 in entsprechenden exakt formkomplementären Ausnehmungen 16 am Zwischenadapter 6 zur Anlage (vgl. **Fig. 8** und **10****)** und sorgen somit für eine exakt reproduzierbar, formschlüssige und spielfreie Verbindung zwischen Verbindungseinrichtung 5 und Zwischenadapter 6.

Die eigentliche Fixierung der Verbindung zwischen Verbindungseinrichtung 5 und Zwischenadapter 6 übernimmt dabei ein in der Verbindungseinrichtung 5 angeordneter Koppelmagnet 17. Dem in der Verbindungseinrichtung 5 angeordneten Koppelmagneten 17 ist ein entsprechendes (nicht dargestelltes) Magnet-Gegenstück aus magnetisch aktivem bzw. aktivierbarem Material zugeordnet, das in einer entsprechenden Ausnehmung 18 des Zwischenadapters 6 angeordnet ist, siehe hierzu insbesondere **Fig. 8** und **10****.**

Verbindungseinrichtung 5 und Zwischenadapter 6 können somit praktisch frei von externen Betätigungs- bzw. Reaktionskräften miteinander verbunden werden, indem sie einfach aneinander zur Anlage gebracht werden. Dabei sorgt die gegenseitige Anziehungskraft des Koppelmagneten 17 und des Magnet-Gegenstücks 18 zusammen mit den Zentrierspitzen 15 der Verbindungseinrichtung 5 und den diesen zugeordneten Ausnehmungen 16 im Zwischenadapter 6 dafür, dass eine in allen drei Raumrichtungen feste und spielfreie Verbindung zwischen Verbindungseinrichtung 5 und Zwischenadapter 6 vorliegt.

Soll nun die Verbindung zwischen Verbindungseinrichtung 5 und Zwischenadapter 6 wieder gelöst werden, so kann dies dank einer in den **Fig. 5** bis **10** erkennbaren Verschiebeeinrichtung für den Koppelmagneten 17 ebenfalls leicht und praktisch reaktionskräftefrei erfolgen. Die Verschiebeeinrichtung umfasst einen axial im Korpus 12 der Verbindungseinrichtung 5 verschiebbaren Führungsstift 19 sowie einen an einem axialen Ende des Führungsstifts 19 angeordneten Betätigungsgriff 20. Das dem Betätigungsgriff 20 gegenüberliegende Ende des Führungsstifts 19 ist mit dem Koppelmagneten 17 der Verbindungseinrichtung 5 fest verbunden. Zudem ist der Koppelmagnet 17 entlang der Axialrichtung des Führungsstifts beweglich in einem entsprechenden Langloch 21 im Korpus 12 der Verbindungseinrichtung 5 angeordnet, vgl. **Fig. 6****.**

In den in **Fig. 5** bis **8** sowie **10** gezeigten Ansichten befindet sich der Koppelmagnet 17 jeweils in seiner Ausgangsstellung, in der der Koppelmagnet 17 exakt am Magnet-Gegenstück 18 des Zwischenadapters 6 zur Anlage kommt, sobald Verbindungseinrichtung 5 und Zwischenadapter 6 aneinander angelegt werden. Zur Lösung der magnetischen Verbindung zwischen Verbindungseinrichtung 5 und Zwischenadapter 6 lässt sich nun der Koppelmagnet 17 mittels Betätigung des Führungsstifts 19 durch Herausziehen des Betätigungsgriffs 20 aus dem Korpus 12 der Verbindungseinrichtung 5 senkrecht zur Magnet-Hauptkraftrichtung aus dem Verbindungsbereich, sprich von seiner Anlage am Magnet-Gegenstück 18 des Zwischenadapters 6, entfernen. Dieses Herausbewegen des Koppelmagneten 17 aus dem Verbindungsbereich senkrecht zur Magnet-Hauptkraftrichtung erfordert lediglich eine vergleichsweise minimale und zudem über einen langen linearen Betätigungsweg fast gleichmäßige Betätigungskraft.

Eine Trennung der magnetischen Verbindung zwischen Verbindungseinrichtung 5 und Zwischenadapter 6 kann dank der Verschiebeeinrichtung 19, 20 für den Koppelmagneten 17 somit nahezu reaktionskräftefrei erfolgen, selbst dann, wenn ein vergleichsweise starker Koppelmagnet 17 verwendet wird, der entlang der Magnet-Hauptkraftrichtung nur unter Aufbringung großer Trennkräfte von seiner Anlage am Magnet-Gegenstück 18 des Zwischenadapters 6 entfernt werden könnte.

Insbesondere kann auf diese Weise der Zwischenadapter 6 von der Verbindungseinrichtung 5 auch dann mittels lediglich geringster Betätigungskräfte am Betätigungsgriff getrennt werden, solange die Verbindungseinrichtung 5 mittels des paraokklusalen Registrierbehelfs 2 noch mit der Zahnreihe des Patienten verbunden ist. Auf diese Weise lässt sich vermeiden, dass bei der Abnahme des Zwischenadapters 6 und des beispielsweise damit verbundenen Messbogen 4 von der Verbindungseinrichtung 5 des paraokklusalen Registrierbehelfs 2 unerwünschte Verfälschungen der exakten Positionierung des paraokklusalen Registrierbehelfs 2 und der Verbindungseinrichtung 5 relativ zum Zahnbogen und Kiefer des Patienten auftreten.

Die **Fig. 11** und **12** symbolisieren in höchst schematischer Abstraktion den Ablauf der Übertragung der Kiefergelenksgeometrie, insbesondere der Patienten-Scharnierachsenlage, auf die okklusale Bissgabel 3 für den Fall der okklusalen Registrierung. Bei der okklusalen Registrierung wird sowohl zur Bestimmung der Scharnierachsenlage gemäß **Fig. 11** **-** anhand des Messbogens 4 mit den Messmarkern 7 - als auch zum Geometrietransfer in den Montagestand 22 bzw. Artikulator gemäß **Fig. 12** dieselbe okklusale Bissgabel 3 verwendet.

Dabei wird zunächst gemäß **Fig. 11** anhand des Messbogens 4 mit den darauf angeordneten Messmarkern 7 berührungslos bzw. optisch wie oben beschrieben die räumliche Lage der Patienten-Scharnierachse 8 relativ zur okklusalen Bissgabel 3, insbesondere relativ zur Kupplungseinrichtung 10 der Bissgabel 3, bestimmt. Im Anschluss an die Kiefergelenksregistrierung bzw. Patienten-Scharnierachsenbestimmung kann sodann die Bissgabel 3 mit der darauf angeordneten Unterkiefer-Zahnimpression (nicht dargestellt) als Bissschlüssel zusammen mit dem zugehörigen Datensatz, der die räumliche Relativposition der Patienten-Scharnierachse 8 relativ zur Kupplungseinrichtung 10 der Bissgabel 3 beschreibt, in einen entsprechenden Artikulator oder Montagestand 22 gemäß **Fig. 12** montiert werden.

Dies ist in **Fig. 12** dadurch symbolisiert, dass die Lage der Patienten-Scharnierachse 8 in dem in **Fig. 12** dargestellten Montagestand 22 mittels punktierter Linie angedeutet ist. Man erkennt, dass in der dargestellten Neutralposition von Kupplungsaufnahme 23 und Gelenkpfannen 24 des Montagestands 22 die tatsächliche Lage der Scharnierachse 8 des Patienten (punktierte Linie) noch nicht mit der Scharnierachse 25 des Montagestands 22 (strichpunktierte Linie) übereinstimmt.

Da die räumliche Relativposition zwischen der der Kupplungseinrichtung 10 der Bissgabel 3 und der Scharnierachse 8 des Patienten jedoch anhand der zuvor durchgeführten Kiefergelenksregistrierung exakt bekannt ist, kann diese räumliche Relativposition zwischen der Kupplungseinrichtung 10 der Bissgabel 3 - bzw. zwischen der mit der Kupplungseinrichtung 10 verbundenen Kupplungsaufnahme 23 des Montagestands 22 - und der Montagestand-Scharnierachse 25 durch entsprechende Justierung des Montagestands 22 ebenso exakt am Montagestand 22 reproduziert werden.

Dies bedeutet mit anderen Worten, dass lediglich anhand der Anordnung der Bissgabel 3 mit den darauf angeordneten Zahnimpressionen als Bissschlüssel, unter Berücksichtigung der Daten zu Patienten-Scharnierachsenlage, und dementsprechender Justierung des Montagestands 22 bzw. Artikulators die exakte Kiefergelenksgeometrie im Montagestand 22 bzw. Artikulator hergestellt werden kann.

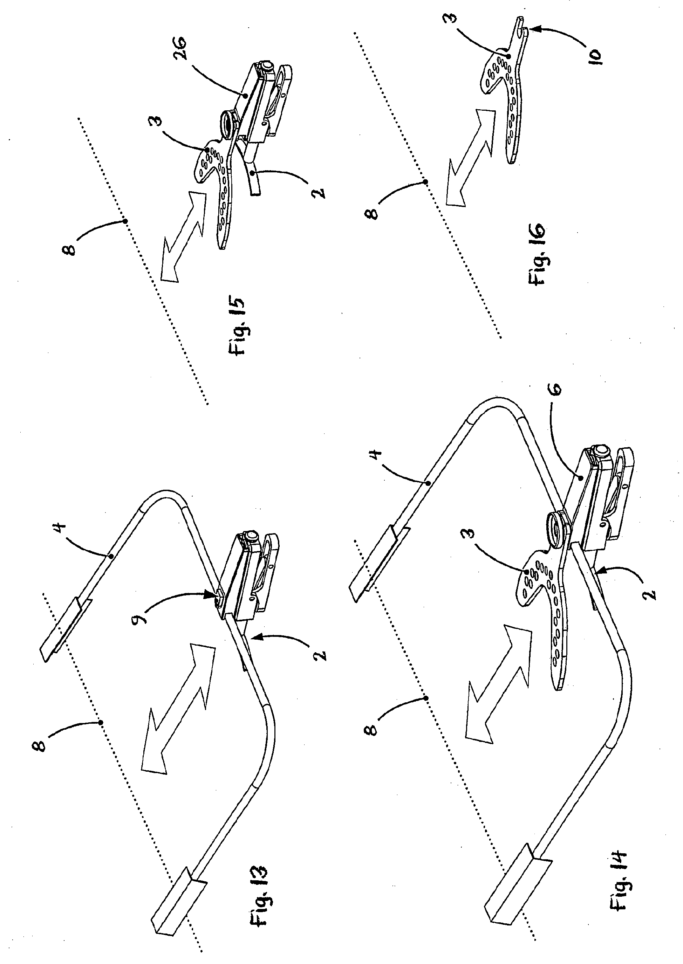

Die **Fig. 13** bis **16** symbolisieren analog zur Darstellung in den **Fig. 11** und 12 den Ablauf der Übertragung der Kiefergelenksgeometrie, insbesondere der Patienten-Scharnierachsenlage 8 auf die okklusale Bissgabel 3, hier jedoch für den Fall der paraokklusalen Registrierung. Bei der paraokklusalen Registrierung wird zunächst zur Bestimmung der Patienten-Scharnierachsenlage 8 gemäß **Fig. 13** **-** wieder anhand des Messbogens 4 mit den Messmarkern 7 - nicht wie zuvor die okklusale Bissgabel 3, sondern der paraokklusale Registrierbehelf 2 verwendet. Dies hat insbesondere den Vorteil, dass bei der Registrierung keinerlei Interferenzen mit der natürlichen Okklusion des Patienten auftreten können.

Nachdem somit gemäß **Fig. 13** die räumliche Position der Patienten-Scharnierachse 8 relativ zum paraokklusalen Registrierbehelf 2 ermittelt ist, muss diese räumlich-geometrische Information noch auf die okklusale Bissgabel 3 übertragen werden. Diese Übertragung der Kiefergelenksgeometrie vom paraokklusalen Registrierbehelf 2 auf die okklusale Bissgabel 3 erfolgt entweder wie in **Fig. 14** oder wie in **Fig. 15** dargestellt.

Der Unterschied zwischen der in **Fig. 14** und der in **Fig. 15** symbolisierten Vorgehensweise liegt lediglich darin, dass der Geometrietransfer gemäß **Fig. 14** vorgenommen wird, während noch der Zwischenadapter 6 mit dem daran angeordneten Messbogen 4 an der Verbindungseinrichtung 5 angeordnet ist, während bei dem Geometrietransfer gemäß **Fig. 15** der Zwischenadapter 6 mit dem daran angeordneten Messbogen 4 zunächst einmal von der Verbindungseinrichtung 5 des paraokklusalen Registrierbehelfs 2 entfernt wurde. Bei der mit **Fig. 15** symbolisierten Vorgehensweise wird sodann ein weiterer, zum ersten Zwischenadapter 6 formkomplementärer Zwischenadapter 26 samt dem darauf angeordneten okklusalen Bissträger 3 an der Verbindungseinrichtung 5 des paraokklusalen Registrierbehelfs 2 angeordnet, was dank der Magnetverbindung 17, 18 von Zwischenadapter 13 und Verbindungseinrichtung 5 magnetisch initiiert wieder selbsttätig und damit praktisch frei von externen Kräften erfolgen kann.

Dabei wird gleichzeitig in der unterseitig an der okklusalen Bissgabel 3 angeordneten (nicht dargestellten) Impressionsmasse - zusätzlich zu der am paraokklusalen Registrierbehelf 2 angeordneten Impression - eine weitere Impression des Zahnbogens des Unterkiefers erzeugt. Da die Erzeugung dieser Impression - anhand der Verbindung der okklusalen Bissgabel 3 mittels der Kupplungseinrichtung 10 und der Kupplungsaufnahme 9 des Zwischenadapters 6 bzw. 26 - wieder unter genau definierter und bekannter geometrischer Relativposition der okklusalen Bissgabel 3 relativ zur Patienten-Scharnierachse 8 erfolgt, wird mit **Fig. 16** dasselbe Ergebnis erhalten, wie zuvor anhand der Darstellungen der **Fig. 11** und **12** erläutert.

Dies bedeutet gemäß **Fig. 16** mit anderen Worten, dass nach dem Geometrietransfer vom paraokklusalen Registrierbehelf 2 auf die okklusale Bissgabel 3 gemäß **Fig. 14** oder **Fig. 15** **-** unter Berücksichtigung der Daten der räumlichen Lage der Patienten-Scharnierachse 8 relativ zur Kupplungseinrichtung 10 der okklusalen Bissgabel 3 - wieder die gesamte geometrische Information bezüglich der Scharnierachsenlage des Patienten lediglich anhand Montage der okklusalen Bissgabel 3 mit dem darauf angeordneten Bissschlüssel und dem Patienten-Scharnierachsen-Datensatz in einem mit einer entsprechenden Kupplungsaufnahme ausgestatteten Montagestand 22 oder Artikulator reproduziert werden kann, vgl. **Fig. 12****.**

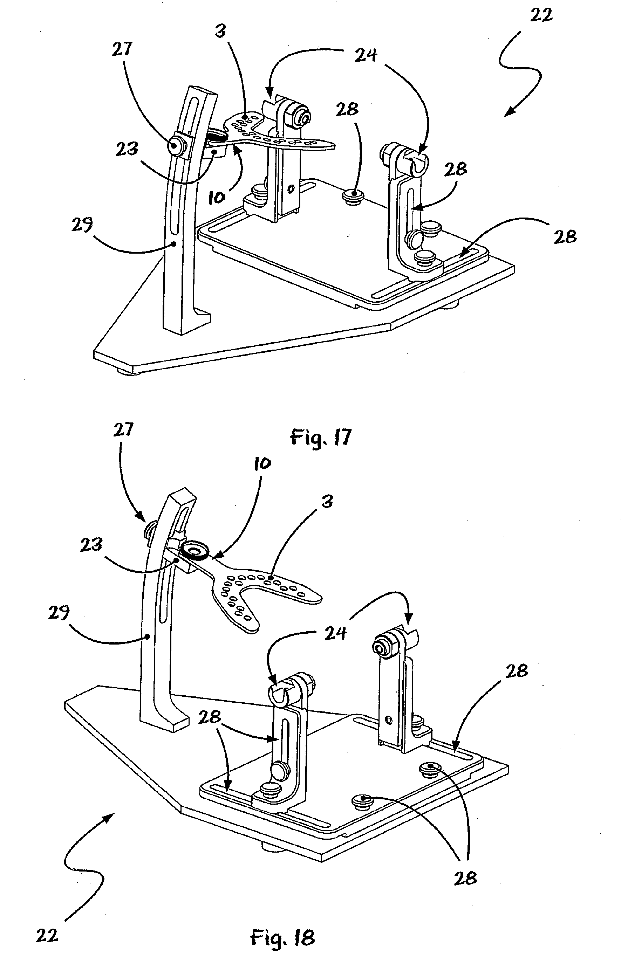

In den **Fig. 17** und **18** ist schließlich der bereits in **Fig. 12** gezeigte Montagestand 22 zur Reproduktion der Kiefergelenksgeometrie, einschließlich einer bereits im Montagestand 22 angeordneten okklusalen Bissgabel 3, nochmals in isometrischer Vorder- und Rückansicht dargestellt.

Man erkennt, dass die okklusale Bissgabel 3 mittels ihrer Kupplungseinrichtung 10 an einer entsprechenden Kupplungsaufnahme 23 des Montagestands 22 angeordnet und mittels einer Rändelschraube 27 befestigt werden kann. Dabei ist die Kupplungsaufnahme 23 des Montagestands formkorrespondierend zur Kupplungsaufnahme 9 des Unterkieferadapters 1 bzw. des Zwischenadapters 6, 26 am Montagestand 22 angeordnet und ermöglicht somit eine exakte, räumlich definierte und reproduzierbare Anordnung der okklusalen Bissgabel 3 im Montagestand 22.

Da, wie zuvor beschrieben, nach der Scharnierachsenbestimmung die räumliche Lage der Patienten-Scharnierachse 8 relativ zur okklusalen Bissgabel 3 bzw. relativ zur Kupplungseinrichtung 10 der okklusalen Bissgabel 3 bekannt ist, kann somit auch die räumliche Scharnierachsenlage im Montagestand 22 relativ zur Kupplungsaufnahme 23 des Montagestands exakt in Übereinstimmung mit der Scharnierachse 8 des Patienten gebracht werden.

Zu diesem Zweck können die Gelenkpfannen 24 des dargestellten Artikulator-Montagestands 22 in allen drei Raumrichtungen mittels entsprechender Parallelführungen 28 verstellt und in der gewünschten Position fixiert werden.

Die Verstellung der Gelenkpfannen 24 entsprechend den zuvor ermittelten Daten zur Patienten-Scharnierachsenlage 8 relativ zur Kupplungseinrichtung 10 der okklusalen Bissgabel 3 bzw. zur Kupplungsaufnahme 23 des Montagestands kann dabei - beispielsweise, jedoch keineswegs ausschließlich - mittels entsprechender, an den Parallelführungen 28 des Montagestands angeordneter (nicht dargestellter) Meßskalen erfolgen.

Ebenso gut kann der Montagestand 22, oder ein dementsprechend ausgestalteter, den Montagestand somit ersetzender Artikulator, beispielsweise auch mit servomotorischen Verstelleinrichtungen zur entsprechenden Verschiebung der Gelenkpfannen 24 in den erforderlichen Raumdimensionen ausgestattet sein. In einem solchen Fall genügt somit lediglich die entsprechende Dateneingabe in eine Steuerungseinrichtung für die servomotorischen Verstelleinrichtungen des Montagestands 22 oder Artikulators, um diesen selbsttätig exakt die Kiefergelenksgeometrie des Patienten, insbesondere bezüglich der räumlichen Scharnierachsenlage 8, einnehmen zu lassen.

Ist der Montagestand 22 oder Artikulator zusätzlich mit einer Datenschnittstelle und der okklusale Bissträger 3 zusätzlich mit einer Datenspeichereinrichtung zur Speicherung der Geometriedaten des Kiefergelenks sowie ebenfalls mit einer Datenschnittstelle versehen, so kann auch die Übergabe der Geometriedaten aus dem okklusalen Bissträger 3 an einen servomotorisch ausgestatteten Montagestand 22 oder Artikulator vollautomatisch erfolgen. In diesem Fall ist dann lediglich noch der okklusale Bissträger 3 im Montagestand 22 bzw. Artikulator anzuordnen, wonach der Montagestand 22 bzw. Artikulator vorkommen selbstständig die Daten zu Kiefergelenksgeometrie aus der Datenspeichereinrichtung des okklusalen Bissträger 3 ausliest und anschließend mittels servomotorischer Verstellung ebenfalls vollautomatisch die Kiefergelenksgeometrie des Patienten exakt reproduziert.

Wie ebenfalls aus **Fig. 17** und **18** ersichtlich, ist die am Montagestand 22 zur Ankopplung des Bissträgers angeordnete Kupplungsaufnahme 23 entlang einer kreisbogenförmig ausgebildeten Führungseinrichtung 29 relativ zur Grundplatte des Montagestands 22 verstellbar. Dabei fällt der Mittelpunkt des durch die Führungseinrichtung 29 gebildeten Kreisbogens mit der Montagestand-Scharnierachse 25 (vgl. **Fig. 12****)** in deren Nulllage bzw. in deren Ausgangslage vor der Übertragung der Kiefergeometrie des Patienten in den Montagestand zusammen.

Auf diese Weise kann auch die zuvor am Patienten bestimmte Schädel-Referenzebene sowie der patientenspezifische Referenzwinkel in den Montagestand 22 bzw. Artikulator übertragen werden. Damit kann im Anschluss an die erfindungsgemäße Übertragung der Kiefergelenksgeometrie insbesondere auch eine Voll-Artikulation einschließlich der auf die Referenzebene bezogenen Kiefergelenksgeometrie erfolgen, beispielsweise einschließlich Kondylenbahnneigung, Bennettwinkel, Retrusuion/Surtrusion, Immediate Side Shift usw.

Im Ergebnis wird somit deutlich, dass mit der Erfindung die Technologie des scharnierachsenbezogenen Transfers von Kiefermodellen entscheidend verbessert, erweitert und dabei gleichzeitig vereinfacht wird. Die Erfindung ermöglicht dabei sowohl eine hochgradige Modularisierung, eine erheblich vereinfachte und beschleunigte Anwendung, als auch eine besonders hohe Genauigkeit bei der Ermittlung und Übertragung der Kiefergelenksgeometrie eines Patienten in einen Montagestand oder Artikulator. Gleichzeitig werden Fehlerquellen systematisch eliminiert, der apparative Aufwand wird entscheidend reduziert und zudem werden apparative Einwirkungen auf den Patienten minimiert.

Die Erfindung liefert damit einen als bahnbrechend zu bezeichnenden Beitrag zur Verbesserung der Kiefergelenksregistrierung und des Transfers von Kiefergelenksgeometrien und Kiefermodellen vom Patienten in einen Montagestand oder Artikulator.

## Patentansprüche

1. Verfahren zum scharnierachsenbezogenen Transfer eines Kiefermodells eines Patienten mittels eines Kieferadapters (1) in einen Artikulator-Montagestand (22) mit einer Artikulator-Scharnierachse (25), der Kieferadapter (1) aufweisend einen Bissträger (3) zur Aufnahme eines Bissschlüssels sowie eine mit dem Bissträger (3) verbundene Kupplungseinrichtung (10), die formschlüssig mit einer am Montagestand (22) in verstellbarer, reproduzierbarer Relativposition zur Montagestand-Scharnierachse (25) anordenbaren, mit der Kupplungseinrichtung (10) formkomplementären Kupplungsaufnahme (23) verbindbar ist,
das Verfahren umfassend die folgenden Verfahrensschritte:
a) Anordnen von Abdruckmasse auf einer Zahnkontaktfläche des Kieferadapters (1);
b) mittels der Abdruckmasse Verbindung des Kieferadapters (1) mit dem Zahnbogen des Patienten-Kiefers unter Erzeugung einer Impression der Zahnreihe in der Abdruckmasse;
c) Durchführung einer Kiefergelenks-Registrierung mit Scharnierachsenbestimmung;
d) Verbindung des Bissträgers (3) mit einem Kiefermodell des Patienten mittels der Zahnimpression in der Abdruckmasse auf dem Bissträger (3);
e) Anordnung von Bissträger (3) und Kiefermodell im Montagestand (22) mittels Verbindung der Bissträger-Kupplungseinrichtung (10) mit der Montagestand-Kupplungsaufnahme (23) und Angleichung der räumlichen Relativposition der Montagestand-Kupplungsaufnahme (23) gegenüber der Scharnierachse (25) des Montagestands (22) an die bei der Registrierung ermittelte räumliche Relativposition zwischen Patienten-Scharnierachse (8) und Kupplungseinrichtung (10) des Kieferadapters (1) bis zur Übereinstimmung zwischen Patienten-Scharnierachse (8) und MontagestandScharnierachse (25);
f) Fixierung des Unterkiefermodells auf der Unterkiefer-Montageplatte des Montagestands (22),
**dadurch gekennzeichnet,**
**dass** der Kieferadapter (1) ein Unterkieferadapter ist,
**dass** die Ermittlung der räumlichen Lage der Patienten-Scharnierachse (8) in Verfahrensschritt c) relativ zum Unterkieferadapter (1) erfolgt,
**dass** der Bissträger (3) ein Unterkiefer-Bissträger ist, der in den Verfahrensschritten d) und e) mit einem Unterkiefermodell des Patienten verbunden ist; und
**dass** die Angleichung der räumlichen Relativposition der MontagestandKupplungsaufnahme (23) und der Montagestand-Scharnierachse (25) in Verfahrensschritt e) anhand der bei der Registrierung ermittelten Relativposition zwischen Patienten-Scharnierachse (8) und Unterkieferadapter (1) erfolgt.

2. Verfahren nach Anspruch 1,
**dadurch gekennzeichnet,**
**dass** die Scharnierachsenbestimmung im Verfahrenschritt c) mittels berührungsloser Messung einer Öffnungsbewegung des Unterkiefers erfolgt.

3. Verfahren nach Anspruch 1 oder 2,
**dadurch gekennzeichnet,**
**dass** die Scharnierachsenbestimmung im Verfahrenschritt c) die Ermittlung einer schädelbezogenen Referenzebene und des zugehörigen Referenzwinkels umfasst, wobei im Verfahrenschritt e) zusätzlich - mittels Justierung der Referenzwinkelposition der Montagestand-Kupplungsaufnahme (23) sowie des an der Kupplungsaufnahme (23) angeordneten Bissträgers (3) zusammen mit dem Unterkiefermodell gegenüber einer Referenzebene des Montagestands (22) - die Angleichung der an den bei der Registrierung ermittelten Referenzwinkel erfolgt.

4. Verfahren nach Anspruch 2 oder 3,
**dadurch gekennzeichnet,**
**dass** zur berührungslosen Messung ein Messträger (4) mit dem Unterkieferadapter (1) verbunden wird, wobei der Messträger (4) Markerelemente (7) zur berührungslosen Positionsbestimmung aufweist.

5. Verfahren nach Anspruch 4,
**dadurch gekennzeichnet,**
**dass** die Verbindung des Messträgers (4) mit dem Unterkieferadapter (1) mittels einer am Messträger (4) angeordneten Kupplungsaufnahme (9) erfolgt, wobei die Kupplungsaufnahme (9) des Messträgers (4) formkomplementär zur Kupplungseinrichtung (10) des Unterkieferadapters (1) ausgebildet ist, und wobei die räumliche Position der Markerelemente (7) des Messträgers (4) relativ zur Kupplungsaufnahme (9) des Messträgers (4) bekannt ist.

6. Verfahren nach einem der Ansprüche 2 bis 5,
**dadurch gekennzeichnet,**
**dass** die berührungslose Messung mittels optischer Bildverfolgung der Markerelemente (7) durch zumindest eine Bildaufnahmekamera erfolgt.

7. Verfahren nach Anspruch 6,
**dadurch gekennzeichnet,**
**dass** die berührungslose Messung digitale Bildverarbeitung der von der Kamera erfassten Markerelemente (7) einschließt, wobei die digitale Bildverarbeitung zumindest eine Nachschärfungsoperation, z.B. eine Houghtransformation umfasst.

8. Verfahren nach einem der Ansprüche 1 bis 7,
**dadurch gekennzeichnet,**
**dass** die Anordnung von Bissträger (3) und Unterkiefermodell im Montagestand (22) im Verfahrenschritt e) sowie die Angleichung der räumlichen Relativposition der Montagestand-Kupplungsaufnahme (23) und des daran angeordneten Bissträgers (3) mit Unterkiefermodell im Verfahrenschritt e) mittels eines Unterkiefertransferbogens erfolgt,
der Unterkiefertransferbogen umfassend zwei Achsmarkierelemente sowie eine gleichzeitig die Montagestand-Kupplungsaufnahme (23) bildende Kupplungsaufnahme für die Kupplungseinrichtung (10) des Bissträgers, wobei die räumliche Relativposition zwischen der Verbindungsgerade der Achsmarkierelemente und der Kupplungseinrichtung des Unterkiefertransferbogens am Unterkiefertransferbogen verstellbar sowie in Übereinstimmung mit der in Verfahrenschritt c) ermittelten Patienten-Scharnierachsenlage fixiert ist,
indem die Achsmarkierelemente mit auf der Scharnierachse des Montagestands liegenden Achsaufnahmepunkten verbunden bzw. in Deckung gebracht werden.

9. Verfahren nach einem der Ansprüche 1 bis 8,
**dadurch gekennzeichnet,**
**dass** der Bissträger des Unterkieferadapters (1) als okklusale Bissgabel (3) ausgebildet ist.

10. Verfahren nach Anspruch 9,
**gekennzeichnet durch**
die zusätzlichen Verfahrensschritte:
c') Anbringen von Abdruckmasse auch auf der oberkieferseitigen Zahnkontaktfläche des Bissträgers (3);
c") Erzeugen einer Impression des Oberkiefer-Zahnbogens in der auf der oberkieferseitigen Zahnkontaktfläche des Bissträgers (3) angeordneten Abdruckmasse.

11. Verfahren nach einem der Ansprüche 1 bis 8,
**dadurch gekennzeichnet,**
**dass** der Bissträger des Unterkieferadapters als paraokklusaler Registrierbehelf (2) ausgebildet ist.

12. Verfahren nach einem der Ansprüche 1 bis 11,
**dadurch gekennzeichnet,**
**dass** der Unterkieferadapter (1) eine okklusale Bissgabel (3) mit Kupplungseinrichtung als Bissträger, sowie einen paraokklusalen Registrierbehelf (2) mit einem - eine Kupplungsaufnahme (9) für die Kupplungseinrichtung (10) der okklusalen Bissgabel (3) aufweisenden - Zwischenadapter (6) umfasst, wobei im Verfahrensschritt c) zur Scharnierachsenbestimmung der paraokklusale Registrierbehelf (2) mit Zwischenadapter (6) verwendet und die räumliche Lage der Patienten-Scharnierachse (8) relativ zur Kupplungsaufnahme (9) des Zwischenadapters (6) bestimmt wird, das Verfahren umfassend die zusätzlichen Verfahrensschritte:
c₁) nach der Scharnierachsenbestimmung Anordnung der okklusalen Bissgabel (3) mittels des Zwischenadapters (6) an dem noch am Unterkiefer des Patienten angeordneten paraokklusalen Registrierbehelf (2) unter Erzeugung einer weiteren Impression des Unterkiefer-Zahnbogens in auf der Zahnkontaktfläche der okklusalen Bissgabel (3) angeordneter Abdruckmasse; und
c₂) Trennung der okklusalen Bissgabel (3) vom paraokklusalen Registrierbehelf (2) sowie Entfernung der okklusalen Bissgabel (3) und des paraokklusalen Registrierbehelfs (2) vom Unterkiefer des Patienten.

13. Verfahren nach einem der Ansprüche 1 bis 12,
dass im Verfahrenschritt c) die räumliche Position der Patienten-Scharnierachse (8) sowohl in einer habituellen Interkuspidationsposition als auch in einer von der habituellen unterschiedlichen therapeutischen Relativstellung zwischen Unterkiefer und Oberkiefer ermittelt wird, das Verfahren umfassend die zusätzlichen Verfahrensschritte:
g) Positionierung eines Oberkiefermodells des Patienten relativ zum Unterkiefermodell im Montagestand (22) sowie Fixierung des Oberkiefermodells an einer Oberkiefer-Montageplatte des Montagestands (22).
h) Relativverschiebung der Oberkiefer-Montageplatte zusammen mit dem Oberkiefermodell gegenüber der Unterkiefer-Montageplatte zusammen mit dem Unterkiefermodell bis zum Erreichen der therapeutischen Relativstellung.

14. Registriersystem, umfassend einen Kieferadapter (1) mit einem Bissträger (3) sowie einen Artikulator-Montagestand (22), zum scharnierachsenbezogenen Transfer eines Kiefermodells eines Patienten in den Montagestand (22) mittels des Kieferadapters (1) und eines auf dem Bissträger (3) anordenbaren Bissschlüssels des Patienten, wobei der Bissträger (3) des Kieferadapters (1) eine Kupplungseinrichtung (10) aufweist, die formschlüssig mit einer am Montagestand (22) in reproduzierbarer Relativposition zur Montagestands-Scharnierachse (25) anordenbaren, zur Kupplungseinrichtung (10) des Bissträgers formkomplementären Kupplungsaufnahme (23) verbindbar ist, und wobei der Kieferadapter (1) mit einem Messträger (4) zur Bestimmung der Patienten-Scharnierachse (8) verbindbar, und die räumliche Position der Kupplungsaufnahme (23) des Montagestands (22) relativ zur Scharnierachse (25) des Montagestands (22) definiert und reproduzierbar verstellbar ist,
**dadurch gekennzeichnet,**
**dass** der Kieferadapter ein Unterkieferadapter (1), der Messträger (4) ein Unterkiefer-Messträger und der Bissträger ein Unterkiefer-Bissträger (3) ist, wobei das Registriersystem zur Bestimmung der Position der Patienten-Scharnierachse (8) relativ zur Kupplungseinrichtung (10) des Unterkiefer-Bissträgers (3) eingerichtet ist.

15. Registriersystem nach Anspruch 14,
**dadurch gekennzeichnet,**
**dass** der Messträger (4) eine zur Kupplungseinrichtung (10) des Unterkieferadapters (1) formkomplementäre Kupplungsaufnahme (9) aufweist.

16. Registriersystem nach Anspruch 14 oder 15,
**dadurch gekennzeichnet,**
**dass** die Montagestand-Kupplungsaufnahme (23) durch eine Kupplungsaufnahme eines am Montagestand (22) in definierter räumlicher Relativstellung zur Scharnierachse des Montagestands (22) anordenbaren Unterkiefertransferbogens gebildet ist, der Unterkiefertransferbogen umfassend zwei Achsmarkierelemente zum Zweck der räumlich definierten Anordnung des Unterkiefertransferbogens am Montagestand, wobei die räumliche Relativposition zwischen der Verbindungsgeraden der Achsmarkierelemente und der Kupplungseinrichtung des Unterkiefertransferbogens am Unterkiefertransferbogen verstellbar sowie in Übereinstimmung mit der Relativposition zwischen Patienten-Scharnierachse und Kupplungseinrichtung des Bissträgers bringbar und am Unterkiefertransferbogen fixierbar ist.

17. Registriersystem nach einem der Ansprüche 14 bis 16,
**dadurch gekennzeichnet,**
**dass** die am Montagestand (22) zur Ankopplung des Bissträgers (3) angeordnete Kupplungsaufnahme (23) entlang einer kreisbogenförmig ausgebildeten Führungseinrichtung (29) relativ zu einer Montageplatte des Montagestands (22) verstellbar ist, wobei der Mittelpunkt des Kreisbogens mit der Montagestand-Scharnierachse (25) in einer Nulllage zusammenfällt.

18. Registriersystem nach einem der Ansprüche 14 bis 17,
**dadurch gekennzeichnet,**
**dass** der Artikulator-Montagestand (22) ein Artikulator oder Artikulator-Oberteil ist.

## Claims

1. Method for the hinge-axis-related transfer of a jaw model of a patient by means of a jaw adapter (1) to an articulator mounting stand (22) having an articulator hinge axis (25), the jaw adapter (1) having a bite support (3) for recording a bite pattern, as well as an attachment device (10) connected with the bite support (3), which device can make a positive connection with an attachment support (23) that can be disposed on the mounting stand (22) in an adjustable, reproducible relative position with regard to the mounting stand hinge axis (25), and is complementary in shape with the attachment device (10), the method comprising the following steps:
a) arranging the casting compound on a teeth contact surface of the jaw adapter (1);
b) using the casting compound, connecting the jaw adapter (1) to the dental arch of the patient's jaw, thereby producing an impression of the row of teeth in the casting compound;
c) registering the jaw joint with determination of the hinge axis;
d) attaching the bite support (3) to a jaw model of the patient by means of the tooth impression in the casting compound on the bite support (3);
e) arranging the bite support (3) and jaw model on the mounting stand (22) by connecting the bite support attachment device (10) to the assembly stand attachment support (23), and aligning the relative spatial position of the mounting stand attachment support (23) in relation to the hinge axis (25) of the mounting stand (22) to the spatial relative position, determined during registration, between the patient hinge axis (8) and the attachment device (10) of the jaw adapter (1), until agreement is reached between the patient hinge axis (8) and the mounting stand hinge axis (25);
f) fixing the lower jaw model in place on the lower jaw mounting plate of the mounting stand (22),
**characterised in that**
the jaw adapter (1) is a lower jaw adapter,
the determination of the spatial position of the patient hinge axis (8) in step c) is carried out relative to the lower jaw adapter (1),
the bite support (3) is a lower jaw bite support that is connected in steps d) and e) to a lower jaw model of the patient; and
the agreement of the relative spatial position of the mounting stand attachment support (23) and the mounting stand hinge axis (25) in step e) takes place using the relative position determined during registration between the patient hinge axis (8) and the lower jaw adapter (1).

2. Method according to claim 1,
**characterised in that**
the determination of the hinge axis in step c) takes place by means of non-contact measurement of an opening movement of the lower jaw.

3. Method according to claim 1 or 2,
**characterised in that**
the determination of the hinge axis in step c) comprises the determination of a reference plane relative to the skull and the associated reference angle wherein, additionally in step e), the agreement of the reference angle to the reference angle determined during registration takes place by adjusting the reference angle position of the mounting stand attachment support (23) as well as the bite support (3) arranged on the attachment support (23) together with the lower jaw model in relation to a reference plane of the mounting stand (22).

4. Method according to claim 2 or 3,
**characterised in that**
to achieve a non-contact measurement, a measurement support (4) is connected to the lower jaw adapter (1), wherein the measurement support (4) has marker elements (7) for the non-contact determination of position.

5. Method according to claim 4,
**characterised in that**
the connection of the measurement support (4) to the lower jaw adapter (1) is done by means of an attachment support (9) arranged on the measurement support (4), wherein the attachment support (9) of the measurement support (4) is formed so as to complement the shape of the attachment device (10) of the lower jaw adapter (1) and wherein the spatial position of the marker elements (7) of the measurement support (4) relative to the attachment support (9) of the measurement support (4) is known.

6. Method according to one of claims 2 to 5,
**characterised in that**
the non-contact measurement takes place by means of optical image tracking of the marker elements (7) using at least one image recording camera.

7. Method according to claim 6,
**characterised in that**
the non-contact measurement includes digital processing of the marker elements (7) acquired by the camera, wherein the digital image processing comprises at least one re-sharpening operation, e.g. a Hough transform.

8. Method according to one of claims 1 to 7,
**characterised in that**
the arrangement of the bite support (3) and the lower jaw model on the mounting stand (22) in step e), as well as the agreement of the relative spatial position of the mounting stand attachment support (23) and of the bite support (3) arranged on it with the lower jaw model in step e) takes place by means of a lower jaw transfer bow,
said latter comprising two axis marker elements as well as an attachment support, simultaneously forming the mounting stand attachment support (23), for the attachment device (10) of the bite support, wherein the relative spatial position between the line joining the axis marker elements and the attachment device of the lower jaw transfer bow is adjustable on the lower jaw transfer bow and is fixed in conformance with the patient hinge axis position determined in step c),
as the axis marker elements are connected, or aligned, with axis position points lying on the hinge axis of the mounting stand.

9. Method according to one of claims 1 to 8,
**characterised in that**
the bite support of the lower jaw adapter (1) is formed as an occlusal bite fork (3).

10. Method according to claim 9,
**characterised by**
the following steps:
c') applying casting compound also to the upper jaw tooth contact surface of the bite support (3),
c") making an impression of the upper jaw dental arch in the casting compound arranged on the upper jaw tooth contact surface of the bite support (3).

11. Method according to one of claims 1 to 8,
**characterised in that**
the bite support of the lower jaw adapter is formed as a paraocclusal registration aid (2).

12. Method according to one of claims 1 to 11,
**characterised in that**
the lower jaw adapter (1) comprises an occlusal bite fork (3) with an attachment device as a bite support, as well as a paraocclusal registration aid (2) with an intermediate adapter (6), having an attachment support (9) for the attachment device (10) of the occlusal bite fork (3), wherein, in step c) for determining the hinge axis, the paraocclusal registration aid (2) is used with the intermediate adapter (6) and the spatial position of the patient hinge axis (8) is determined relative to the attachment support (9) of the intermediate adapter (6), the method comprising the additional steps:
c₁) after determination of the hinge axis, arranging the occlusal bite fork (3), using the intermediate adapter (6), on the paraocclusal registration aid (2) still arranged on the lower jaw of the patient, to make another impression of the lower jaw dental arch in the casting compound arranged on the tooth contact surface of the occlusal bite fork (3); and
c₂) separating the occlusal bite fork (3) from the paraocclusal registration aid (2) and removing the occlusal bite fork (3) and the paraocclusal registration aid (2) from the lower jaw of the patient.

13. Method according to one of claims 1 to 12,
that, in step c), the spatial position of the patient hinge axis (8) is determined both in a habitual intercuspation position as well as in a relative position between lower jaw and upper jaw therapeutically different from the habitual position, the step comprising the additional steps:
g) positioning an upper jaw model of the patient relative to the lower jaw model on the mounting stand (22) as well as fixing the upper jaw model on an upper jaw mounting plate of the mounting stand (22).
h) relatively moving the upper jaw mounting plate with the upper jaw model in relation to the lower jaw mounting plate with the lower jaw model to achieve the relative therapeutic position.

14. Registration system, comprising a jaw adapter (1) with a bite support (3) as well as an articulator mounting stand (22), for the transfer of a patient's jaw model in relation to a hinge axis to the mounting stand (22) by means of the jaw adapter (1) and a patient bite pattern disposable on the bite support (3), wherein the bite support (3) of the jaw adapter (1) has an attachment device (10) that can be connected positively with an attachment support (23), complementary in shape to the attachment device (10) of the bite support, that can be arranged on the mounting stand (22) in a reproducible position relative to the mounting stand hinge axis (25), and wherein the jaw adapter (1) can be connected with a measurement support (4) for determining the patient hinge axis (8), and the spatial position of the attachment support (23) of the mounting stand (22) relative to the hinge axis (25) of the mounting stand (22) is defined and is reproducibly adjustable,
**characterised in that**
the jaw adapter is a lower jaw adapter (1), the measurement support (4) is a lower jaw measurement support and the bite support is a lower jaw bite support (3), wherein the registration system is designed to determine the position of the patient hinge axis (8) relative to the attachment device (10) of the lower jaw bite support (3).

15. Registration system according to claim 14,
**characterised in that**
the measurement support (4) has an attachment support (9) complementary in shape to the attachment device (10) of the lower jaw adapter (1).

16. Registration system according to claim 14 or 15,
**characterised in that**
the mounting stand attachment support (23) is formed by an attachment support of a lower jaw transfer bow that can be disposed on the mounting stand (22) in a defined spatial position relative to the hinge axis of the mounting stand (22), the lower jaw transfer bow comprising two axis marking elements for the purpose of spatially defined placement of the lower jaw transfer bow on the mounting stand, wherein the relative spatial position between the straight line connecting the axis marking elements and the attachment device of the lower jaw transfer bow is adjustable on the lower jaw transfer bow, and can be brought into agreement with the relative position between the patient hinge axis and the attachment device of the bite support, and fixed in place on the lower jaw transfer bow.

17. Registration system according to one of the claims 14 to 16,
**characterised in that**
the attachment support (23) arranged on the mounting stand (22) to attach the bite support (3) is adjustable along a curve-shaped guide device (29) relative to a mounting plate of the mounting stand (22), wherein the mid-point of the curve coincides with the mounting stand hinge axis (25) at a zero position.

18. Registration system according to one of the claims 14 to 17,
**characterised in that**
the articulator mounting stand (22) is an articulator or an articulator upper section.

## Revendications

1. Procédé destiné au transfert en fonction de l'axe de charnière d'un modèle de mâchoire d'un patient à l'aide d'un adaptateur dentaire (1) dans un support de montage sur articulateur (22) doté d'un axe de charnière articulateur (25), ledit adaptateur dentaire (1) présentant un support de morsure (3) pour la production d'un clé de morsure ainsi que d'un dispositif d'accouplement (10) raccordé au support de morsure (3) qui peut être raccordé à engagement positif à un logement d'accouplement (23) pouvant être disposé avec complémentarité de forme audit dispositif d'accouplement (10) du support de morsure sur ledit support de montage (22) en position relative réglable et reproductible par rapport audit axe de charnière (25) de support de montage,
le procédé comprenant les étapes de processus suivantes :
a) disposition du matériau d'empreinte sur une surface de contact dentaire dudit adaptateur dentaire (1) ;
b) raccordement dudit adaptateur dentaire (1) à l'aide dudit matériau d'empreinte à l'arc dentaire de la mâchoire du patient pour obtenir une impression de la rangée de dents dans ledit matériau d'empreinte ;
c) réalisation d'un enregistrement de l'articulation temporo-mandibulaire avec détermination de l'axe de charnière ;
d) raccordement dudit support de morsure (3) avec un modèle de mâchoire du patient à l'aide de l'empreinte dentaire dans ledit matériau d'empreinte sur ledit support de morsure (3) ;
e) disposition dudit support de morsure (3) et modèle de mâchoire dans ledit support de montage (22) en raccordant ledit dispositif d'accouplement (10) de support de morsure au logement d'accouplement (23) du support de montage et ajustement de la position relative spatiale dudit logement d'accouplement (23) du support de montage par rapport à l'axe de charnière (25) dudit support de montage (22) à ladite position relative spatiale établie à l'enregistrement entre l'axe de charnière du patient (8) et ledit dispositif d'accouplement (10) dudit adaptateur dentaire (1) jusqu'à ce que ledit axe de charnière du patient (8) concorde avec ledit axe de charnière du support de montage (25) ;
f) fixation du modèle de la mâchoire inférieure sur la plaque de montage de la mâchoire inférieure dudit support de montage (22),
**caractérisé en ce**
**que** ledit adaptateur dentaire (1) est un adaptateur de mâchoire inférieure,
**que** l'évaluation de la position spatiale dudit axe de charnière du patient (8) s'effectue à l'étape de procédé c) par rapport audit adaptateur de mâchoire inférieure (1),
**que** ledit support de morsure (3) est un support de morsure de mâchoire inférieure raccordé à un modèle de mâchoire inférieure du patient aux étapes d) et e) du procédé et
**que** l'ajustement de la position relative spatiale dudit logement d'accouplement (23) du support de montage et dudit axe de charnière (25) du support de montage s'effectue à l'étape e) du procédé à l'aide de la position relative spatiale évaluée à l'enregistrement entre ledit axe de charnière du patient (8) et ledit adaptateur de mâchoire inférieure (1).

2. Procédé selon la revendication 1,
**caractérisé en ce**
**que** la détermination de l'axe de charnière à l'étape c) du procédé s'effectue à l'aide d'une mesure sans contact d'un mouvement d'ouverture de la mâchoire inférieure.

3. Procédé selon la revendication 1 ou 2,
**caractérisé en ce**
**que** la détermination de l'axe de charnière à l'étape c) du procédé comprend l'évaluation d'un niveau de référence céphalique et de l'angle de référence afférant, l'ajustement sur l'angle de référence évalué à l'enregistrement étant également effectué à l'étape e) du procédé à l'aide de l'ajustement de la position angulaire de référence dudit logement d'accouplement (23) du support de montage ainsi que dudit support de morsure (3) disposé sur ledit logement d'accouplement (23) avec le modèle de la mâchoire inférieure par rapport à un niveau de référence dudit support de montage (22).

4. Procédé selon la revendication 2 ou 3,
**caractérisé en ce**
**qu'**un support de mesure (4) est raccordé audit adaptateur de mâchoire inférieure (1) pour permettre une mesure sans contact, ledit support de mesure (4) présentant des éléments de marquage (7) en vue de déterminer la position sans contact.

5. Procédé selon la revendication 4,
**caractérisé en ce**
**que** le raccordement dudit support de mesure (4) est effectué avec ledit adaptateur de mâchoire inférieure (1) à l'aide d'un logement d'accouplement (9) disposé sur ledit support de mesure (4), ledit logement d'accouplement (9) dudit support de mesure (4) étant formé avec complémentarité de forme par rapport audit dispositif d'accouplement (10) dudit adaptateur de mâchoire inférieure (1), et la position spatiale desdits éléments de marquage (7) dudit support de mesure (4) étant connue par rapport audit logement d'accouplement (9) dudit support de mesure (4).

6. Procédé selon l'une des revendications 2 à 5,
**caractérisé en ce**
**que** la mesure sans contact est effectuée à l'aide d'un tracé d'image optique desdits éléments de marquage (7) par une caméra de prise d'images au moins.

7. Procédé selon la revendication 6,
**caractérisé en ce**
**que** la mesure sans contact inclut un traitement d'image numérique desdits éléments de marquage (7) saisis par la caméra, le traitement d'image numérique comprenant au moins une opération de netteté, par ex. une transformée de Hough.

8. Procédé selon l'une des revendications 1 à 7,
**caractérisé en ce**
**que** la disposition dudit support de morsure (3) et du modèle de mâchoire inférieure s'effectue dans ledit support de montage (22) à l'étape e) du procédé ainsi que l'ajustement de la position relative spatiale dudit logement d'accouplement (23) du support de montage et dudit support de morsure (3) disposé dessus avec un modèle de mâchoire inférieure s'effectue à l'étape e) du procédé à l'aide d'un arc de transfert de mâchoire inférieure,
l'arc de transfert de mâchoire inférieure comprenant deux éléments de marquage axial ainsi qu'un logement d'accouplement formant simultanément un logement d'accouplement (23) de support de montage pour ledit dispositif d'accouplement (10) du support de morsure, la position relative spatiale entre la droite de liaison des éléments de marquage axial et le dispositif d'accouplement de l'arc de transfert de mâchoire inférieure étant réglable sur l'arc de transfert de mâchoire inférieure, et étant fixée selon la position axiale de la charnière du patient établie à l'étape c) du procédé,
tandis que les éléments de marquage axial sont raccordés ou ajustés aux points de logement axial situés sur l'axe de charnière du support de montage.

9. Procédé selon l'une des revendications 1 à 8,
**caractérisé en ce**
**que** le support de morsure dudit adaptateur de mâchoire inférieure (1) est formé comme une fourchette buccale d'occlusion (3).

10. Procédé selon la revendication 9,
**caractérisé en**
les étapes de procédé supplémentaires :
c') Pose d'un matériau d'empreinte également sur la surface de contact dentaire de la mâchoire supérieure dudit support de morsure (3) ;
c") Production d'une empreinte de l'arc dentaire de la mâchoire supérieure dans le matériau d'empreinte disposé sur la surface de contact dentaire de la mâchoire supérieure dudit support de morsure (3).

11. Procédé selon l'une des revendications 1 à 8,
**caractérisé en ce**
**que** le support de morsure de l'adaptateur de mâchoire inférieure est formé comme un dispositif d'enregistrement paraocclusif (2).

12. Procédé selon l'une des revendications 1 à 11,
**caractérisé en ce**
**que** ledit adaptateur de mâchoire inférieure (1) comprend une fourchette buccale d'occlusion (3) avec un dispositif d'accouplement comme support de morsure, ainsi qu'un dispositif d'enregistrement paraocclusif (2) avec un adaptateur intermédiaire (6) présentant un logement d'accouplement (9) destiné audit dispositif d'accouplement (10) de ladite fourchette buccale d'occlusion (3), ledit dispositif d'enregistrement paraocclusif (2) étant utilisé avec un adaptateur intermédiaire (6) à l'étape c) du procédé pour déterminer l'axe de charnière, et la position spatiale dudit axe de charnière du patient (8) étant déterminée par rapport au logement d'accouplement (9) dudit adaptateur intermédiaire (6), le procédé comprenant les étapes de procédé supplémentaires :
c₁) selon la détermination de l'axe de charnière, ajustement de ladite fourchette buccale d'occlusion (3) à l'aide dudit adaptateur intermédiaire (6) sur ledit dispositif d'enregistrement paraocclusif (2) disposé encore sur la mâchoire inférieure du patient en vue de la production d'une autre empreinte de l'arc dentaire de la mâchoire inférieure dans le matériau d'empreinte sur la surface de contact dentaire de ladite fourchette buccale d'occlusion (3) ; et
c₂) séparation de ladite fourchette buccale d'occlusion (3) du dudit dispositif d'enregistrement paraocclusif (2) ainsi qu'extraction de ladite fourchette buccale d'occlusion (3) et dudit dispositif d'enregistrement paraocclusif (2) de la mâchoire inférieure du patient.

13. Procédé selon l'une des revendications 1 à 12,
que la position spatiale dudit axe de charnière du patient (8) est établie à l'étape c) du procédé non seulement dans une position en intercuspidation habituelle mais également dans une position relative thérapeutique différente habituelle entre la mâchoire inférieure et la mâchoire supérieure, le procédé comprenant les étapes de procédé supplémentaires :
g) positionnement d'un modèle de mâchoire supérieure du patient par rapport au modèle de mâchoire inférieure dans le support de montage (22) ainsi que fixation du modèle de mâchoire supérieure sur une plaque de montage de mâchoire supérieure dudit support de montage (22).
h) déplacement relatif de la plaque de montage de mâchoire supérieure avec le modèle de mâchoire supérieure contre la plaque de montage de mâchoire inférieure avec le modèle de mâchoire inférieure jusqu'à obtenir la position relative thérapeutique.

14. Système d'enregistrement comprenant un adaptateur dentaire (1) avec un support de morsure (3) ainsi qu'un support de montage articulateur (22) pour le transfert en fonction de l'axe de charnière d'un modèle de mâchoire d'un patient à l'aide dudit adaptateur dentaire (1) dans ledit support de montage (22) et d'une clé de morsure du patient disposée sur ledit support de morsure (3), ledit support de morsure (3) dudit adaptateur dentaire (1) présentant un dispositif d'accouplement (10) qui peut être raccordé à engagement positif à un logement d'accouplement (23) pouvant être disposé avec complémentarité de forme audit dispositif d'accouplement (10) du support de morsure sur ledit support de montage (22) en position relative réglable et reproductible par rapport audit axe de charnière (25) de support de montage, et ledit adaptateur dentaire (1) pouvant être raccordé à un support de mesure (4) pour déterminer l'axe de charnière du patient (8), et la position spatiale dudit logement d'accouplement (23) du support de montage (22) pouvant être définie et réglée de manière reproductible par rapport audit axe de charnière (25) dudit support de montage (22),
**caractérisé en ce**
**que** l'adaptateur dentaire est un adaptateur de mâchoire inférieure (1), le support de mesure (4) est un support de mesure de mâchoire inférieure et le support de morsure est un support de morsure de mâchoire inférieure (3), le système d'enregistrement étant installé en vue de déterminer la position de l'axe de charnière du patient (8) par rapport au dispositif d'accouplement (10) dudit support de morsure de la mâchoire inférieure (3).

15. Système d'enregistrement selon la revendication 14,
**caractérisé en ce**
**que** le support de mesure (4) présente un logement d'accouplement (9) avec complémentarité de forme par rapport au dispositif d'accouplement (10) de l'adaptateur de mâchoire inférieure (1).

16. Système d'enregistrement selon l'une des revendications 14 ou 15,
**caractérisé en ce**
**que** le logement d'accouplement du support de montage (23) est formé par un logement d'accouplement d'un arc de transfert de mâchoire inférieure pouvant être disposé sur le support de montage (22) en position relative spatiale définie par rapport à l'axe de charnière dudit support de montage (22), l'arc de transfert de mâchoire inférieure comprenant deux éléments de marquage axial destinés à la disposition spatiale définie de l'arc de transfert de mâchoire inférieure sur le support de montage, la position relative spatiale entre les droites de liaison des éléments de marquage axial et le dispositif d'accouplement de l'arc de transfert de mâchoire inférieure étant réglable sur l'arc de transfert de mâchoire inférieure, et pouvant être mise selon la position relative entre l'axe de charnière du patient et le dispositif d'accouplement du support de morsure et pouvant être fixée sur l'arc de transfert de mâchoire inférieure.

17. Système d'enregistrement selon l'une des revendications 14 à 16,
**caractérisé en ce**
**que** le logement d'accouplement (23) disposé sur le support de montage (22) pour l'accouplement du support de morsure (3) est réglable le long d'un dispositif de guidage (29) en forme d'arc de cercle par rapport à une plaque de montage dudit support de montage (22), le point central de l'arc de cercle coïncidant avec l'axe de charnière du support de montage (25) en position zéro.

18. Système d'enregistrement selon l'une des revendications 14 à 17,
**caractérisé en ce**
**que** le support de montage sur articulateur (22) est un articulateur ou une partie supérieure d'articulateur.
